# EUROPEAN PATENT APPLICATION

(11) **EP 4 837 651 A1**
(43) Date of publication of application: **11.11.2026**
(21) Application number: 24924567.1
(22) Date of filing: 10.12.2024
(51) Int. Cl.: B01D 53/92, B01D 46/00, B01D 46/71, B01D 53/38, B01D 53/50, B01D 53/52, B01D 53/56, B01D 53/62, B01D 53/83, B01D 53/96, C01B 32/50

(54) **GAS TREATMENT FACILITY AND GAS TREATMENT FACILITY METHOD**

(30) Priority: 13.02.2024 JP 2024019352
(71) Applicant: Mitsubishi Heavy Industries, Ltd., Chiyoda-ku Tokyo 100-8332 (JP)
(72) Inventor: KATSUKI, Masatoshi, Tokyo 100-8332 (JP); ONUKI, Takuro, Tokyo 100-8332 (JP); MUKAI, Yosuke, Tokyo 100-8332 (JP)
(74) Representative: Studio Torta S.p.A.
(86) International application number: PCT/JP2024/043590
(87) International publication number: WO 2025/173364

(57) **Abstract**

A gas treatment facility includes a dust collection filter device and a reactant supplier configured to supply, into a gas, a reactant formed in powder form capable of reacting with a recovery target gas. The dust collection filter device includes a case in which an inlet through which the gas flows in and an outlet through which the gas flows out are formed, and a dust collection filter configured to partition an internal space of the case into an inlet-side space on a side of the inlet and an outlet-side space on a side of the outlet. The reactant supplier is configured to supply, to the gas line or the inlet-side space, the reactant subjected to desorption treatment for desorbing, from the reactant, the recovery target gas reacted with and adsorbed on the reactant.

## Description

### TECHNICAL FIELD

The present disclosure relates to a gas treatment facility and a gas treatment facility method.

Priority is claimed on Japanese Patent Application No. 2024-019352, filed February 13, 2024, the content of which is incorporated herein by reference.

### BACKGROUND ART

In recent years, from the viewpoint of carbon neutrality, attention has been focused on the concentration of carbon dioxide (CO₂) contained in the atmosphere. From the viewpoint of lowering the concentration of carbon dioxide in the atmosphere, various devices that recover carbon dioxide from an exhaust gas are known. As a device that recovers carbon dioxide, for example, direct air capture (DAC) is known. In DAC, after carbon dioxide contained in atmospheric air guided to an adsorption chamber is adsorbed by an adsorbent, the inside of the adsorption chamber is decompressed or heated such that carbon dioxide desorbed from the adsorbent is suctioned or stored outside and effectively used.

For example, Patent Document 1 discloses a vacuum unit to which DAC is applied. This vacuum unit has an adsorption structure disposed in an internal space of a vacuum chamber. In the vacuum chamber, carbon dioxide is adsorbed onto the adsorption structure by bringing an air flow into contact with the adsorption structure.

### Citation List

### Patent Document

Patent Document 1: United States Patent No. 10232305

### SUMMARY OF INVENTION

### Technical Problem

Meanwhile, in a structure such as that of Patent Document 1, a reactant capable of adsorbing carbon dioxide needs to be coated on a base material such as a honeycomb to form a block-shaped adsorption structure. Therefore, when heating or decompression is performed, the entire adsorption structure including the base material needs to be heated or decompressed. As a result, processing time and energy loss for desorbing carbon dioxide increase. In this way, it is desirable to suppress loss for desorbing a recovery target gas contained in a gas.

The present disclosure provides a gas treatment facility and a gas treatment facility method capable of separating a recovery target gas contained in a gas while suppressing loss.

### Solution to Problem

The present disclosure relates to a gas treatment facility including: a dust collection filter device; a gas line configured to introduce a gas containing a recovery target gas into the dust collection filter device; and a reactant supplier configured to supply, into the gas, a reactant formed in powder form capable of reacting with the recovery target gas, in which the dust collection filter device includes a case in which an inlet through which the gas flows in and an outlet through which the gas flows out are formed, and a dust collection filter configured to partition an internal space of the case into an inlet-side space, which is a space within the case on a side of the inlet and an outlet-side space, which is a space within the case on a side of the outlet, the gas line is connected to the inlet of the dust collection filter device, and the reactant supplier is configured to supply, to the gas line or the inlet-side space, the reactant subjected to desorption treatment for desorbing, from the reactant, the recovery target gas reacted with and adsorbed on the reactant.

The present disclosure relates to a gas treatment facility method including: a reactant supply step of supplying, to a gas flowing through a gas line and containing a recovery target gas, a reactant formed in powder form capable of reacting with the recovery target gas; and a collection step of collecting, using a dust collection filter device including a dust collection filter, the reactant formed in powder form that has flowed into the dust collection filter device, in which, in the reactant supply step, the reactant is supplied after desorption treatment for desorbing, from the reactant, the recovery target gas reacted with and adsorbed on the reactant is performed. Advantageous Effects of Invention

With the gas treatment facility and the gas treatment facility method according to the present disclosure, the recovery target gas in the gas can be separated while suppressing the loss.

### BRIEF DESCRIPTION OF DRAWINGS

[FIG. 1] A schematic diagram showing a gas treatment facility according to a first embodiment of the present disclosure.
[FIG. 2] A flowchart showing a gas treatment facility method according to the first embodiment (second embodiment, third embodiment, and sixth embodiment) of the present disclosure.
[FIG. 3] A schematic diagram showing a gas treatment facility according to the second embodiment of the present disclosure.
[FIG. 4] A schematic diagram showing a gas treatment facility according to the third embodiment of the present disclosure.
[FIG. 5] A schematic diagram showing a gas treatment facility according to a fourth embodiment of the present disclosure.
[FIG. 6] A flowchart showing a gas treatment facility method according to the fourth embodiment of the present disclosure.
[FIG. 7] A schematic diagram showing a gas treatment facility according to a fifth embodiment of the present disclosure.
[FIG. 8] A flowchart showing a gas treatment facility method according to the fifth embodiment of the present disclosure.
[FIG. 9] A schematic diagram showing a gas treatment facility according to a sixth embodiment of the present disclosure.

### DESCRIPTION OF EMBODIMENTS

Hereinafter, embodiments for carrying out an absorption tower, a gas treatment facility, and a gas treatment facility method according to the present disclosure will be described with reference to the accompanying drawings. However, the present disclosure is not limited to only these embodiments.

### <First Embodiment>

### (Gas Treatment Facility)

A gas treatment facility 100 is a facility that treats a gas EG from a gas generation source 1. Examples of the gas generation source 1 include a waste incinerator, a coal-fired or natural-gas-fired power generation plant, a gas turbine, a gas engine, a cement plant, an ironmaking plant, and a glass melting plant. The gas EG from the gas generation source 1 includes a recovery target gas, ash, heavy metals, and the like. The recovery target gas includes, in addition to carbon dioxide (CO2), nitrogen oxides (NOx) such as nitrogen monoxide (NO), sulfur oxides (SOx) such as sulfur dioxide (SO2), and hydrogen sulfide (H2S). In addition, the gas generation source 1 may be a facility that is outside the gas treatment facility 100 and that delivers the atmospheric air into the gas treatment facility 100. That is, the gas treatment facility 100 treats an exhaust gas or the atmospheric air discharged from various facilities as the gas.

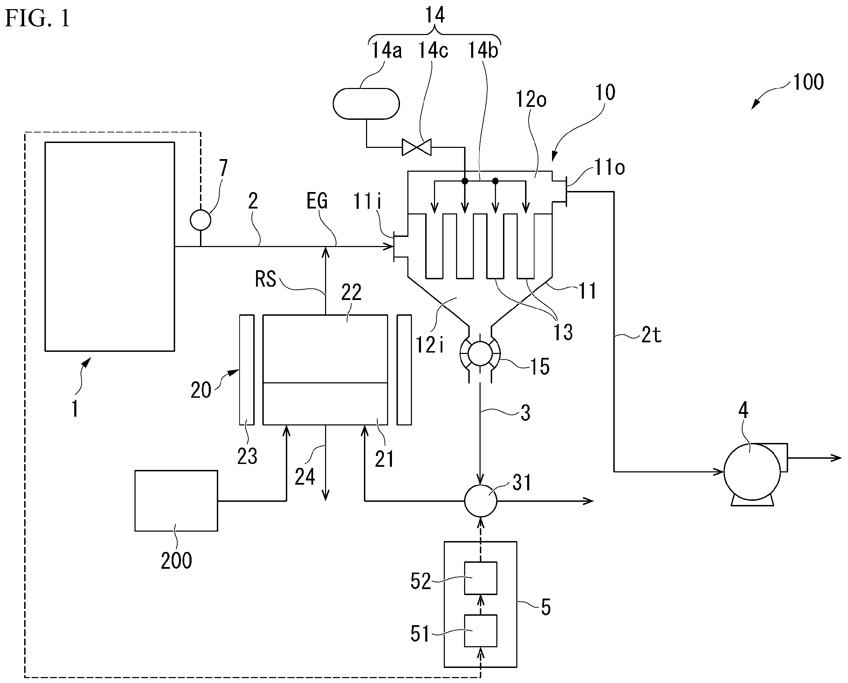

As shown in FIG. 1, the gas treatment facility 100 in the present embodiment includes a dust collection filter device 10, a gas line 2, a treated gas line 2t, a suction blower 4, a reactant supplier 20, a reactant return line 3, a delivery destination switching unit 31, a new reactant supply unit 200, a gas information acquisition unit 7, and a control unit 5.

The dust collection filter device 10 includes a case 11, a dust collection filter 13 that can collect powder or solid matter, a backwash device 14, and a discharger 15. Here, the powder includes the reactant RS formed in powder form that has passed through the gas line 2 and on which the recovery target gas has already been adsorbed, and the unreacted reactant RS formed in powder form. In addition, the solid includes lumps of impurities such as dust and particulate matter (PM) adhering to the dust collection filter 13 other than the reactant RS, lumps of ash, lumps of heavy metals, and the like.

An inlet 11i through which the gas flows in and an outlet 11o through which the gas flows out are formed in the case 11. Fibers constituting the dust collection filter 13 are, for example, glass fibers, ceramic fibers, polypropylene, nylon, acrylic, polyester, aramid, polyimide, polyphenylene sulfide (PPS), polytetrafluoroethylene (PTFE), and the like. The dust collection filter 13 is disposed to partition an internal space of the case 11 into an inlet-side space 12i, which is a space within the case 11 located closer to the inlet 11i than the dust collection filter 13 and an outlet-side space 12o, which is a space within the case 11 located closer to the outlet 11o than the dust collection filter 13.

The backwash device 14 is configured to deliver a high-pressure gas (for example, high-pressure air) to the outlet-side space 12o such that the outlet-side space 12o in the case 11 has a pressure higher than a pressure of the inlet-side space 12i, and detach powder and solids collected by the dust collection filter 13 from the dust collection filter 13. The backwash device 14 includes a backwash high-pressure gas tank 14a, a high-pressure gas guide pipe 14b configured to deliver the high-pressure gas in the backwash high-pressure gas tank 14a to the dust collection filter 13 to flow from the outlet-side space 12o toward the inlet-side space 12i in the case 11, and an on-off valve 14c provided in the high-pressure gas guide pipe 14b.

The discharger 15 is configured to discharge, to the outside, powder and solids that have been detached from the dust collection filter 13 by operation of the backwash device 14 and have fallen through the inlet-side space 12i in the case 11. Examples of such a discharger 15 include a rotary valve, and a screw conveyor. The discharger 15 is connected to the reactant return line 3.

One end of the gas line 2 is connected to the gas generation source 1. The other end of the gas line 2 is connected to the inlet 11i of the dust collection filter device 10. The gas line 2 can guide the gas EG from the gas generation source 1 into the dust collection filter device 10.

One end of the treated gas line 2t is connected to the outlet 11o of the dust collection filter device 10. The other end of the treated gas line 2t is connected to an external discharge destination. This treated gas line 2t can discharge the treated gas EG, which is the gas EG that has passed through the dust collection filter device 10, to the outside.

The suction blower 4 is disposed in the middle of the treated gas line 2t. When the treated gas EG can be exhausted from the dust collection filter device 10 even without the suction blower 4, the suction blower 4 is unnecessary. In such a case, the treated gas line 2t itself need not be disposed. In addition, even when the suction blower 4 is disposed, the suction blower 4 is not limited to being disposed in the treated gas line 2t. The suction blower 4 may be disposed in the gas line 2.

The reactant supplier 20 can supply the reactant RS capable of reacting with the recovery target gas into the gas line 2 or the inlet-side space 12i. The reactant supplier 20 supplies the reactant RS that has been subjected to desorption treatment. The reactant RS is in a powdery form having an average particle size of 1 mm or less. Here, the average particle size is, for example, a median diameter indicated by d50. Examples of the reactant RS include zeolite, a metal-organic framework (MOF), an amine-based compound, an alkaline metal compound, and slaked lime. The desorption treatment is a treatment for desorbing the recovery target gas adsorbed by reacting with the reactant RS from the reactant RS.

The reactant supplier 20 according to the present embodiment includes a storage unit 21 capable of storing the reactant RS, a supply unit 22 capable of supplying the reactant RS stored in the storage unit 21 into the gas EG, and a desorption unit 23 capable of performing the desorption treatment on the reactant RS disposed in the storage unit 21.

The storage unit 21 is a hopper capable of storing the reactant RS. The reactant RS is supplied to the storage unit 21 from the reactant return line 3 and a new reactant supply unit 200. That is, the reactant RS that has been supplied one or more times to the gas line 2 and has passed through the dust collection filter device 10 is supplied to the storage unit 21 from the reactant return line 3. Further, a new reactant RS is supplied to the storage unit 21 from the new reactant supply unit 200. Here, the new reactant RS is an unused reactant RS (which may have adsorbed some recovery target gas via air) and is a reactant RS that has not passed through the gas line 2 or the dust collection filter device 10 even once. In addition, a gas discharge line 24 that discharges, to the outside, gas (for example, carbon dioxide) desorbed from the reactant RS by the desorption treatment is connected to the storage unit 21.

The supply unit 22 is connected to the gas line 2. The supply unit 22 quantitatively supplies the reactant RS from the inside of the storage unit 21 into the gas line 2. The supply unit 22 is, for example, a rotary feeder, and is capable of adjusting a supply amount of the reactant RS by changing the rotation speed.

The desorption unit 23 desorbs the recovery target gas from the reactant RS disposed in the storage unit 21. The desorption unit 23 according to the present embodiment desorbs the recovery target gas from the reactant RS by heating, as the desorption treatment. The reactant supplier 20 heats the powdery reactant RS to a temperature higher than the temperature of the gas EG flowing through the gas line 2, as the desorption treatment. The desorption unit 23 is, for example, a heater that can be heated from the outside in a state of covering both the exterior of the storage unit 21 and the supply unit 22. As a result, the desorption unit 23 according to the present embodiment heats not only the storage unit 21 but also the reactant RS disposed in the supply unit 22. In this way, the desorption unit 23 is capable of heating only the powdery reactant RS without including other configurations such as a base material.

The new reactant supply unit 200 is capable of supplying a new reactant RS to the reactant supplier 20. The new reactant supply unit 200 is connected to the storage unit 21.

The reactant return line 3 connects the discharger 15 and the reactant supplier 20. One end of the reactant return line 3 is connected to the discharger 15. The other end of the reactant return line 3 is connected to the storage unit 21. The reactant RS discharged from the discharger 15 can be supplied to the reactant supplier 20 by the reactant return line 3.

The delivery destination switching unit 31 is disposed in the middle of the reactant return line 3. The delivery destination switching unit 31 is capable of switching the discharge destination of the reactant RS supplied from the discharger 15 to the reactant return line 3 to the storage unit 21 or the outside and discharging the reactant RS. The delivery destination switching unit 31 switches the discharge destination of the reactant RS in accordance with an instruction from the control unit 5.

The gas information acquisition unit 7 acquires information on the concentration of the recovery target gas (carbon dioxide in the present embodiment) in the gas EG flowing through the gas line 2, the humidity of the gas EG, the flow rate of the gas EG, the pressure of the gas EG, and the temperature of the gas EG. The gas information acquisition unit 7 is disposed at a position upstream of the position at which the reactant RS is supplied from the supply unit 22 (a position closer to the gas generation source 1). The gas information acquisition unit 7 measures and acquires the concentration of the recovery target gas in the gas EG flowing through the gas line 2. Further, the gas information acquisition unit 7 measures and acquires the humidity of the gas EG flowing through the gas line 2. Furthermore, the gas information acquisition unit 7 measures and acquires the gas flow rate of the gas EG flowing through the gas line 2. Moreover, the gas information acquisition unit 7 measures and acquires the temperature of the gas EG flowing through the gas line 2. Further, the gas information acquisition unit 7 measures and acquires the pressure of the gas EG flowing through the gas line 2. The gas information acquisition unit 7 outputs the information on the acquired concentration of the recovery target gas in the gas EG, the information on the acquired humidity of the gas EG, the information on the acquired gas flow rate of the gas EG, the information on the acquired pressure of the gas EG, and the information on the acquired temperature of the gas EG to the control unit 5C. The gas flow rate of the gas EG may be acquired based on a rotation speed, power, or the like of the suction blower 4, instead of by the gas information acquisition unit 7.

The control unit 5 causes the delivery destination switching unit 31 to switch a discharge destination of the reactant RS according to an adsorption amount of the recovery target gas adsorbed on the reactant RS discharged by the discharger 15. The information on the concentration of the recovery target gas in the gas EG, the information on the humidity of the gas EG, the information on the gas flow rate of the gas EG, the information on the pressure of the gas EG, and the information on the temperature of the gas EG are input to the control unit 5 from the gas information acquisition unit 7. The control unit 5 according to the present embodiment includes an adsorption amount acquisition unit 51 and an adsorption amount determination unit 52.

The adsorption amount acquisition unit 51 acquires an adsorption amount of the recovery target gas adsorbed on the reactant RS discharged by the discharger 15. The adsorption amount acquisition unit 51 calculates the adsorption amount of the recovery target gas based on, for example, the supply amount of the reactant RS, the information on the concentration of the recovery target gas in the gas EG flowing through the gas line 2, the information on the humidity of the gas EG, the information on the gas flow rate of the gas EG, the information on the pressure of the gas EG, the information on the temperature of the gas EG, and the backwashing duration in the backwash device 14. The backwashing duration is a period during which the reactant RS remains adhered to the dust collection filter 13, and is an interval until the next backwashing is performed. That is, the frequency of the backwashing is determined by the backwashing duration. When the backwashing duration extends over a long period, the dust collection filter 13 becomes clogged, resulting in a situation in which it is difficult for the gas EG to pass through the dust collection filter 13. Information such as the supply amount of the reactant RS, the information on the concentration of the recovery target gas in the gas EG flowing through the gas line 2, the information on the humidity of the gas EG, the information on the gas flow rate of the gas EG, the information on the pressure of the gas EG, the information on the temperature of the gas EG, and the backwashing duration in the backwash device 14 may be input in advance or may be automatically detected.

The adsorption amount determination unit 52 determines whether the adsorption amount acquired by the adsorption amount acquisition unit 51 is below a predetermined adsorption amount reference value. Here, the adsorption amount reference value is a value at which the reactant RS can be regarded as not being completely regenerated even when subjected to the desorption treatment and being unable to newly react with the recovery target gas. That is, the adsorption amount reference value is a value representing a degraded state of the reactant RS. When the adsorption amount exceeds the adsorption amount reference value, this indicates that the reactant RS has not yet fully degraded and is usable as the reactant RS. Conversely, when the adsorption amount is below the adsorption amount reference value, this indicates that the reactant RS has degraded and is unusable. When the adsorption amount determination unit 52 determines that the adsorption amount exceeds the adsorption amount reference value, the adsorption amount determination unit 52 delivers, to the delivery destination switching unit 31, a signal for switching a transport destination to transport the reactant RS to the storage unit 21. When the adsorption amount determination unit 52 determines that the adsorption amount is below the adsorption amount reference value, the adsorption amount determination unit 52 delivers, to the delivery destination switching unit 31, a signal for switching a transport destination to discharge the reactant RS to the outside. Accordingly, the reactant RS discharged by the discharger 15 is supplied to the reactant supplier 20 when the adsorption amount determination unit 52 determines that the adsorption amount exceeds the adsorption amount reference value. In addition, a new reactant RS is supplied from the new reactant supply unit 200 to the reactant supplier 20 when the adsorption amount determination unit 52 determines that the adsorption amount is below the adsorption amount reference value.

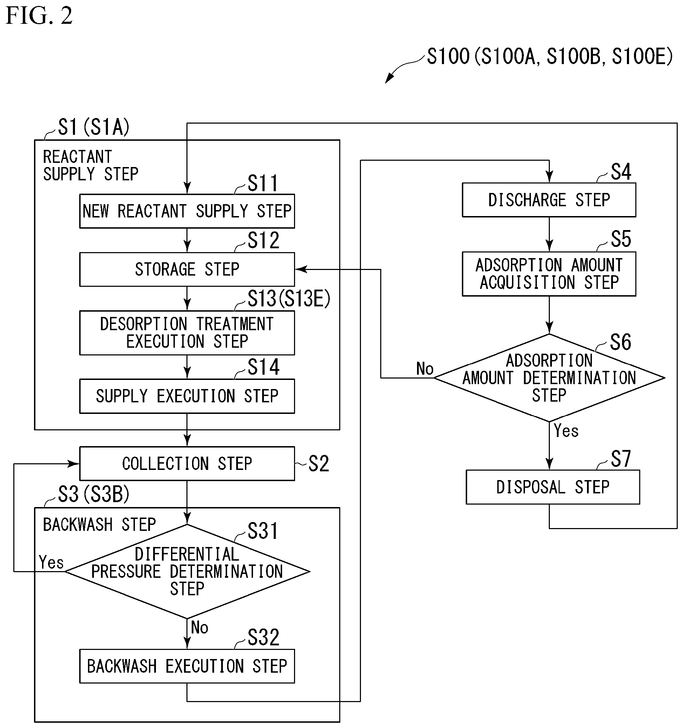

Next, a gas treatment facility method S100 in the gas treatment facility 100 described above will be described with reference to the flowchart shown in FIG. 2.

The reactant supplier 20 supplies, to the gas EG flowing through the gas line 2, the powdery reactant RS having an average particle size of 1 mm or less (S1: reactant supply step). Specifically, in the reactant supply step S1, a new reactant RS is supplied from the new reactant supply unit 200 to the reactant supplier 20 (S11: new reactant supply step). The supplied new reactant RS is temporarily stored in the storage unit 21 (S12: storage step). The reactant RS stored in the storage unit 21 is heated by the desorption unit 23 to a temperature higher than a temperature of the gas EG flowing through the gas line 2 as the desorption treatment (S13: desorption treatment execution step). As a result, the recovery target gas is desorbed from the reactant RS. The reactant RS from which the recovery target gas has been desorbed is supplied from the supply device to the gas EG flowing through the gas line 2 (S14: supply execution step). The gas EG may contain ash, heavy metals, and the like in addition to the recovery target gas. When the gas EG is atmospheric air, the gas EG does not contain ash, heavy metals, or the like.

The gas EG containing the reactant RS flows into the inlet-side space 12i of the dust collection filter device 10 through the gas line 2. As a result, the reactant formed in powder form RS and solids in the gas EG are collected by the dust collection filter 13, and gas in the gas EG flows out from the dust collection filter device 10 as treated gas EG (S2: collection step). The treated gas EG that has flowed out from the dust collection filter device 10 is discharged to the outside through the treated gas line 2t.

In addition, the recovery target gas in the gas EG reacts with or is adsorbed on the reactant RS and is collected in a process of passing through the gas line 2, the inlet-side space 12i of the dust collection filter device 10, and a layer of powder (powdery reactant RS) adhering to the dust collection filter 13.

After treatment in the dust collection filter device 10 is performed over a predetermined period of time, backwashing is performed on the dust collection filter 13, and the powder and solids collected by the dust collection filter 13 are detached from the dust collection filter 13 (S3: backwash step). In the backwash step S3, a differential pressure between the inlet-side space 12i and the outlet-side space 12o in the dust collection filter device 10 is determined (S31: differential pressure determination step). Specifically, in the dust collection filter device 10, as the gas EG continues to be supplied, a layer of the powder and solids adhering to the dust collection filter 13 becomes thicker. As a result, the differential pressure between the inlet-side space 12i and the outlet-side space 12o in the dust collection filter device 10 increases. In the differential pressure determination step S31, whether the differential pressure is below a predetermined differential pressure reference value is determined. Here, the differential pressure reference value is a value at which it can be determined that the powder and solids are excessively adhering to the dust collection filter 13. That is, when the differential pressure becomes equal to or greater than the differential pressure reference value, a situation occurs in which it is difficult for the gas EG to pass through the dust collection filter 13. In the differential pressure determination step S31, whether a predetermined backwashing duration has elapsed from the previous backwashing is also determined. When it is determined that the differential pressure is below the differential pressure reference value or when it is determined that the backwashing duration has not elapsed, backwashing is not performed, and the collection step S2 is performed again. When it is determined that the differential pressure is not below the differential pressure reference value or when it is determined that the backwashing duration has elapsed, backwashing is performed (S32: backwash execution step).

In the backwash step S3, in a case where the gas flow rate of the gas EG supplied to the dust collection filter device 10, the concentration of the recovery target gas, and the temperature are stable, the supply amount of the powder is also constant, and thus the differential pressure determination step S31 may be omitted. In such a case, the backwashing is performed at a predetermined backwashing interval without determining the differential pressure.

In the backwash execution step S32, the on-off valve 14c of the backwash device 14 opens, and the high-pressure gas in the backwash high-pressure gas tank 14a is delivered to the dust collection filter 13 to flow from the outlet-side space 12o toward the inlet-side space 12i. The high-pressure gas causes the powder and solids adhering to the dust collection filter 13 to be separated from the dust collection filter 13, and the powder and solids fall through the inlet-side space 12i of the dust collection filter device 10. The powder and solids that have fallen through the inlet-side space 12i are discharged out of the dust collection filter device 10 by the discharger 15 (S4: discharge step).

In addition, an adsorption amount of the recovery target gas adsorbed on the reactant RS discharged from the discharger 15 is acquired (S5: adsorption amount acquisition step). In the adsorption amount acquisition step S5, for example, the adsorption amount acquisition unit 51 of the control unit 5 calculates the adsorption amount of the recovery target gas based on information on a concentration of the recovery target gas in the gas EG, information on humidity of the gas EG, information on a gas flow rate of the gas EG, information on pressure of the gas EG, information on temperature of the gas EG, and a backwashing duration in the backwash device 14.

Whether the adsorption amount acquired in the adsorption amount acquisition step S5 is below a predetermined adsorption amount reference value is determined (S6: adsorption amount determination step). When it is determined that the adsorption amount exceeds the adsorption amount reference value, the delivery destination switching unit 31 is switched, and the reactant RS is transported to the storage unit 21. When it is determined that the adsorption amount is below the adsorption amount reference value, the delivery destination switching unit 31 is switched, and the reactant RS is discharged to the outside.

The storage step S12 is performed again on the reactant RS transported to the storage unit 21. That is, after being stored, the supplied reactant RS is subjected to desorption treatment, supplied to the gas line 2, and delivered to the dust collection filter device 10. In this manner, when it is determined that the adsorption amount exceeds the adsorption amount reference value, the reactant RS continues to circulate through the reactant supplier 20, the gas line 2, and the dust collection filter device 10.

In addition, the reactant RS discharged to the outside is discarded (S7: disposal step). Specifically, a disposal amount is calculated, and the reactant RS is discarded based on the disposal amount. The recovery target gas adsorbed on the reactant RS may be desorbed and separately used before disposal. A new reactant RS in an amount comparable to the disposal amount discarded in the disposal step S7 is newly supplied from the new reactant supply unit 200 to the reactant supplier 20 (S11: new reactant supply step).

### (Operational Effects)

In the gas treatment facility 100 and the gas treatment facility method S100, the powdery reactant RS subjected to the desorption treatment is supplied to the gas EG by the reactant supplier 20. When the reactant RS is supplied, the recovery target gas in the gas EG reacts with the reactant RS and becomes a reaction product. In this case, the supplied reactant RS is in a powdery form having an average particle size of 1 mm or less. In the reactant RS formed in powder form, a specific surface area is extremely large compared with a reactant having a large particle size such as pellets or a reactant coated on a base material such as a honeycomb coat type and formed into a large lump. Therefore, by supplying the powdery reactant RS to the gas EG, the recovery target gas in the gas EG is effectively adsorbed and separated. Furthermore, when the recovery target gas is desorbed from the reactant RS that has adsorbed the recovery target gas, the reactant RS needs to be heated and subjected to the desorption treatment. On the other hand, in the present embodiment, the desorption treatment is performed on the powdery reactant RS. Since the desorption treatment is performed while the reactant RS is in a powdery form, the energy required for performing the desorption treatment on the reactant RS is suppressed. As a result, the recovery target gas in the gas EG can be separated while suppressing the loss.

As the desorption treatment, the powdery reactant RS is heated to a high temperature exceeding the temperature of the gas EG flowing through the gas line 2. Therefore, the reactant RS for which the desorption treatment has been completed is cooled by the flowing gas EG by being supplied to the gas line 2. It is found that, under the same pressure, the lower the temperature of the reactant RS, the greater the adsorption amount of the recovery target gas. Therefore, by cooling the reactant RS that has been heated to a high temperature by completing the desorption treatment, the adsorption effect of the recovery target gas can be improved. In addition, the reactant RS can be cooled merely by supplying the reactant RS into the gas EG flowing through the gas line 2, without preparing a new device for cooling the reactant RS. This makes it possible to improve adsorption performance of the recovery target gas while completing the desorption treatment on the reactant RS with high accuracy and suppressing cost.

In addition, the reactant RS supplied to the gas line 2 is collected by the dust collection filter 13, thereby reacting with the recovery target gas in the gas EG in a state of flowing through the gas line 2 and the inlet-side space 12i of the dust collection filter device 10 and adhering to the dust collection filter 13. Therefore, a time for sufficiently adsorbing the recovery target gas can be secured. The reactant RS collected by the dust collection filter 13 can be detached from the dust collection filter 13 by the backwash device 14. The reactant RS detached from the dust collection filter 13 is discharged from the discharger 15 and returned to the storage unit 21 via the reactant return line 3. Therefore, the reactant RS in a state of having sufficiently adsorbed the recovery target gas can be recovered from the dust collection filter 13. The reactant RS in a state of having adsorbed the recovery target gas is heated by the desorption unit 23 while being stored in the storage unit 21, and the recovery target gas is separated. Therefore, the reactant RS in a state in which the recovery target gas has been sufficiently desorbed can be supplied again to the gas line 2. This makes it possible to recycle the reactant RS formed in powder form and suppress an amount of use of the reactant RS.

Further, the adsorption amount acquisition unit 51 acquires the adsorption amount of the recovery target gas adsorbed on the reactant RS discharged by the discharger 15. Then, the adsorption amount determination unit 52 determines whether the acquired adsorption amount of the recovery target gas is below the adsorption amount reference value. When the adsorption amount determination unit 52 determines that the adsorption amount exceeds the adsorption amount reference value, the adsorption amount determination unit 52 causes the delivery destination switching unit 31 to supply the reactant RS discharged by the discharger 15 to the storage unit 21. In addition, when the adsorption amount determination unit 52 determines that the adsorption amount is below the adsorption amount reference value, the adsorption amount determination unit 52 causes the delivery destination switching unit 31 to discharge the reactant RS discharged by the discharger 15 to the outside. As a result, a new reactant RS is supplied to the storage unit 21 from the new reactant supply unit 200. With such a configuration, the performance of the reactant RS can be evaluated based on the adsorption amount of the recovery target gas adsorbed on the reactant RS discharged from the discharger 15. Therefore, it becomes easy to discard the reactant RS having degraded performance and switch a timing for supplying a new reactant RS. This makes it possible to continue operation of supplying, into the gas EG in the disposal gas line, the reactant RS for which adsorption performance is constantly maintained.

### <Second Embodiment>

Next, a gas treatment facility 100A according to a second embodiment of the present disclosure will be described. In the second embodiment described below, components common to those of the first embodiment are denoted by the same reference signs in the drawings, and descriptions thereof will be omitted. In the second embodiment, a configuration for supplying the reactant RS from the reactant supplier 20 differs from the first embodiment.

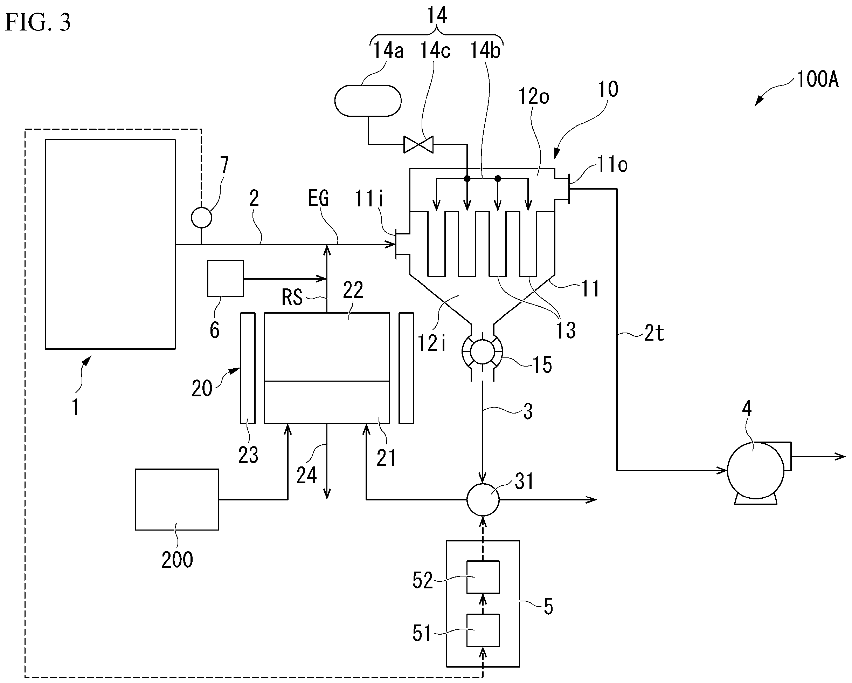

As shown in FIG. 3, the gas treatment facility 100A according to the second embodiment further includes a reactant cooling unit 6. The reactant cooling unit 6 cools the reactant RS formed in powder form to a temperature lower than a temperature of the gas EG. Specifically, the reactant cooling unit 6 cools the reactant RS immediately before being supplied from the supply unit 22 to the gas line 2. The reactant cooling unit 6 performs cooling, for example, by mixing outside air or humidified gas with the reactant RS, or by exchanging heat at a connection portion between the supply unit 22 and the gas line 2 with a low-temperature fluid such as cold water. Therefore, in a gas treatment facility method S100A according to the second embodiment, in a reactant supply step S1A shown in FIG. 2, the reactant RS is cooled to a temperature equal to or lower than the temperature of the gas EG and is supplied to the gas EG.

### (Operational Effects)

In the gas treatment facility 100A and the gas treatment facility method S100A according to the second embodiment, the reactant RS is cooled to a low temperature equal to or lower than the temperature of the gas EG by the reactant cooling unit 6 and is then supplied to the gas EG. Therefore, when the target to be adsorbed on the reactant RS is carbon dioxide, the adsorption effect of carbon dioxide can be particularly improved by cooling the reactant RS that has reached a high temperature sufficient for completing the desorption treatment to a low temperature equal to or lower than a temperature of the gas EG. In addition, when humidified gas is mixed with the reactant RS during cooling, a water absorption amount of the reactant RS increases. As a result, the adsorption effect of carbon dioxide can be further improved.

### <Third Embodiment>

Next, a gas treatment facility 100B according to a third embodiment of the present disclosure will be described. In the third embodiment described below, components common to those of the first embodiment and the second embodiment are denoted by the same reference signs in the drawings, and descriptions thereof will be omitted. In the third embodiment, a configuration for adjusting the high-pressure gas discharged from the backwash device 14 differs from the first embodiment and the second embodiment.

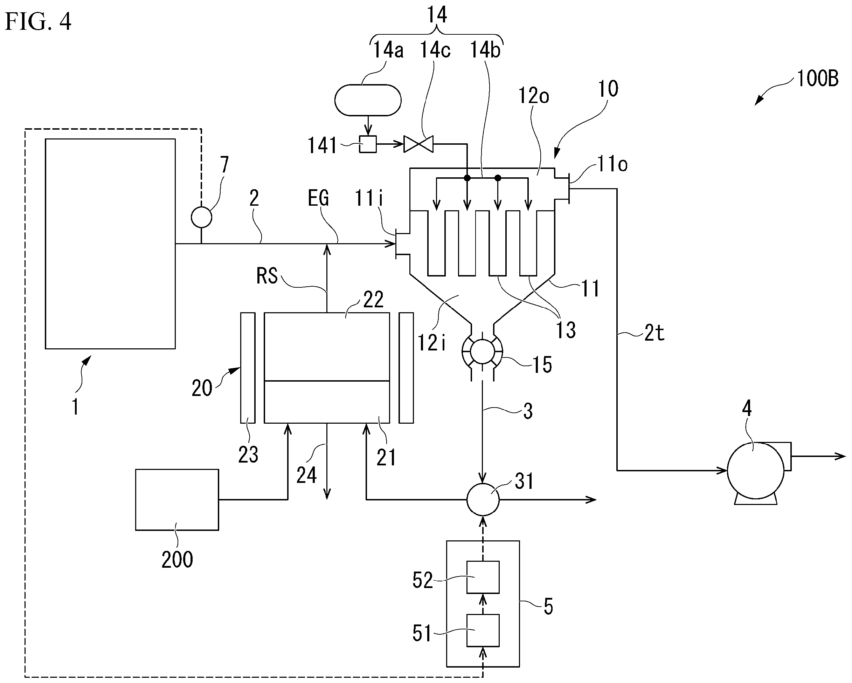

As shown in FIG. 4, the gas treatment facility 100B according to the third embodiment further includes a backwash gas adjustment unit 141. The backwash gas adjustment unit 141 sets a temperature of the high-pressure gas to a temperature equal to or lower than a temperature of the gas EG flowing through the gas line 2, or sets humidity of the high-pressure gas to humidity higher than humidity of the gas EG flowing through the gas line 2. Specifically, the backwash gas adjustment unit 141 cools the high-pressure gas discharged from the backwash high-pressure gas tank 14a to the high-pressure gas guide pipe 14b and increases humidity thereof. Accordingly, in the third embodiment, the high-pressure gas discharged from the high-pressure gas guide pipe 14b toward the dust collection filter 13 has a low temperature and high humidity with respect to the gas EG flowing through the gas line 2. Therefore, in a gas treatment facility method S100B according to the third embodiment, in a backwash step S3B shown in FIG. 2, the high-pressure gas is supplied at a low temperature equal to or lower than the temperature of the gas EG flowing through the gas line 2 or at high humidity exceeding the humidity of the gas EG.

The backwash gas adjustment unit 141 is not limited to a configuration that adjusts both temperature and humidity of the high-pressure gas. The backwash gas adjustment unit 141 may have a configuration that adjusts only one of temperature and humidity of the high-pressure gas.

### (Operational Effects)

In the gas treatment facility 100B and the gas treatment facility method S100B according to the third embodiment, the temperature of the high-pressure gas sent to the dust collection filter 13 for backwashing is lowered to a temperature equal to or lower than a temperature of the gas EG. In addition, humidity of the high-pressure gas sent to the dust collection filter 13 is increased to exceed the humidity of the gas EG. Therefore, the reactant RS adhering to the dust collection filter 13 is cooled by backwashing, and adsorption performance of the reactant RS is improved. Therefore, even during backwashing, the adsorption effect of the recovery target gas can be improved. In particular, when the high-pressure gas during backwashing is high-pressure air, the recovery target gas contained in the high-pressure air can also be adsorbed. In addition, in a case where the reactant RS has a characteristic that adsorption performance is improved in the presence of moisture, as in an amine-based compound, and the target to be adsorbed is carbon dioxide, the reactant RS adhering to the dust collection filter 13 is brought into a high-humidity state by backwashing, and the adsorption performance of the reactant RS is improved. Therefore, during backwashing, the adsorption effect of the recovery target gas can be further improved.

In the backwash device 14, it is sufficient that the temperature of the high-pressure gas is lowered to a temperature equal to or lower than a temperature of the gas EG, or that humidity of the high-pressure gas is increased to exceed humidity of the gas EG. Therefore, in the backwash device 14, only the temperature of the high-pressure gas may be lowered to a temperature equal to or lower than a temperature of the gas EG, or only humidity of the high-pressure gas may be increased to exceed humidity of the gas EG. That is, the backwash gas adjustment unit 141 is not limited to a structure that adjusts both temperature and humidity of the high-pressure gas, and may be a structure that adjusts only one of temperature and humidity of the high-pressure gas.

### <Fourth Embodiment>

Next, a gas treatment facility 100C according to a fourth embodiment of the present disclosure will be described. In the fourth embodiment described below, components common to those of the first to third embodiments are denoted by the same reference signs in the drawings, and descriptions thereof will be omitted. In the fourth embodiment, a configuration for adjusting operating conditions according to a state of the gas EG flowing through the gas line 2 differs from the first embodiment to the third embodiment.

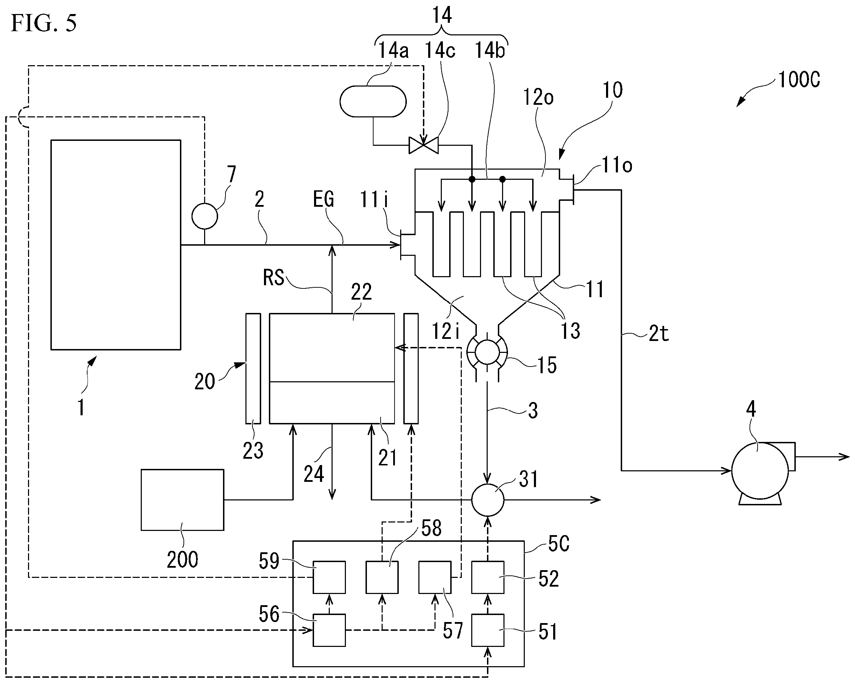

As shown in FIG. 5, the gas treatment facility 100C according to the fourth embodiment adjusts the supply state, the desorption conditions, and the backwash conditions of the reactant RS in accordance with the state of the gas EG flowing through the gas line 2. The gas treatment facility 100C is configured to adjust a supply amount of the reactant RS into the gas EG in the reactant supplier 20 according to information on a concentration of the recovery target gas in the gas EG, information on humidity of the gas EG, information on a gas flow rate of the gas EG, information on pressure of the gas EG, and information on temperature of the gas EG. Specifically, the reactant supplier 20 is configured to adjust the supply amount of the reactant RS into the gas EG to increase the supply amount of the reactant RS when the concentration of the recovery target gas in the gas EG increases, the humidity of the gas EG decreases, the gas flow rate increases, the pressure decreases, or the temperature rises. In addition, the reactant supplier 20 is configured to adjust the supply amount of the reactant RS into the gas EG to decrease the supply amount of the reactant RS when the concentration of the recovery target gas in the gas EG decreases, the humidity of the gas EG increases, the gas flow rate decreases, the pressure increases, or the temperature decreases. Furthermore, the gas treatment facility 100C is configured to adjust a duration of the desorption treatment of the reactant RS in the reactant supplier 20 according to the concentration of the recovery target gas in the gas EG and the humidity of the gas EG. The gas treatment facility 100C is configured to adjust a backwashing duration (frequency) in the backwash device 14 according to humidity of the gas EG. Specifically, the reactant supplier 20 is configured to adjust a duration of the desorption treatment to increase the duration of the desorption treatment when the adsorption amount of the recovery target gas and a moisture amount contained in the reactant RS increase. In addition, the reactant supplier 20 is configured to adjust the duration of the desorption treatment to decrease the duration of the desorption treatment when the adsorption amount of the recovery target gas and the moisture amount contained in the reactant RS decrease.

The control unit 5C according to the fourth embodiment controls the reactant supplier 20 and the backwash device 14 in accordance with the concentration of the recovery target gas in the gas EG, the humidity (H₂O concentration) of the gas EG, the flow rate of the gas EG, the information on the pressure of the gas EG, and the temperature of the gas EG. The control unit 5C according to the present embodiment further includes a filter adsorption state acquisition unit 56, a supply condition adjustment unit 57, a desorption condition adjustment unit 58, and a backwash condition adjustment unit 59, in addition to the adsorption amount acquisition unit 51 and the adsorption amount determination unit 52.

The filter adsorption state acquisition unit 56 calculates and acquires an adsorption amount of the recovery target gas on the reactant RS and an adsorption amount of moisture (H₂O) in the dust collection filter 13, based on information on a concentration of the recovery target gas in the gas EG, information on humidity of the gas EG, information on a gas flow rate of the gas EG, information on pressure of the gas EG, and information on temperature of the gas EG. The information on the concentration of the recovery target gas in the gas EG, the information on the humidity of the gas EG, the information on the gas flow rate of the gas EG, the information on the pressure of the gas EG, and the information on the temperature of the gas EG are input to the filter adsorption state acquisition unit 56 from the gas information acquisition unit 7.

The filter adsorption state acquisition unit 56 calculates an adsorption amount of the recovery target gas on the reactant RS collected by the dust collection filter 13, based on the input information on the concentration of the recovery target gas, information on humidity of the gas EG, information on a gas flow rate of the gas EG, information on pressure of the gas EG, and information on temperature of the gas EG. Specifically, the filter adsorption state acquisition unit 56 calculates a filtration speed in the dust collection filter 13 based on the input gas flow rate of the gas EG. The adsorption amount of the recovery target gas on the reactant RS in the dust collection filter 13 is calculated based on the calculated filtration speed and the input information on the concentration, temperature, pressure, and humidity of the recovery target gas. The filter adsorption state acquisition unit 56 sends information on the calculated adsorption amount of the recovery target gas to the supply condition adjustment unit 57 and the desorption condition adjustment unit 58.

In addition, the filter adsorption state acquisition unit 56 calculates an adsorption amount of moisture (moisture amount) on the reactant RS collected by the dust collection filter 13, based on the input information on concentration, information on humidity, information on a gas flow rate of the gas EG, information on pressure of the gas EG, and information on temperature. Specifically, the filter adsorption state acquisition unit 56 calculates a moisture amount of the reactant RS in the dust collection filter 13 based on the calculated filtration speed and the input information on concentration, temperature, pressure, and humidity. The filter adsorption state acquisition unit 56 transmits the information on the calculated moisture amount to the desorption condition adjustment unit 58 and the backwash condition adjustment unit 59.

The supply condition adjustment unit 57 adjusts the supply amount of the reactant RS from the supply unit 22 to the gas EG based on the information on the adsorption amount of the recovery target gas calculated and acquired by the adsorption state adjustment unit. For example, the supply condition adjustment unit 57 calculates the supply amount of the reactant RS at which the adsorption amount of the recovery target gas reaches a predetermined filter recovery target gas reference value. Here, the filter recovery target gas reference value is a limit amount of the recovery target gas that can be adsorbed in the reactant RS in the dust collection filter 13. The filter recovery target gas reference value is a limit adsorption amount that can be regenerated by performing the desorption treatment on the reactant RS, and is a small value equal to or less than the adsorption amount reference value. The supply condition adjustment unit 57 sends an instruction to the supply unit 22 to supply the calculated supply amount of the reactant RS. Accordingly, the supply unit 22 increases the supply amount of the reactant RS to the gas line 2 when the acquired concentration of the recovery target gas in the gas EG increases, the acquired humidity decreases, the acquired flow rate increases, the acquired pressure decreases, or the acquired temperature rises. In addition, the supply unit 22 decreases the supply amount of the reactant RS to the gas line 2 when the acquired concentration of the recovery target gas in the gas EG decreases, the acquired humidity increases, the acquired flow rate decreases, the acquired pressure increases, or the acquired temperature decreases.

The desorption condition adjustment unit 58 adjusts the condition for performing the desorption treatment based on the information on the adsorption amount and the moisture amount of the recovery target gas calculated and acquired by the adsorption state adjustment unit. The desorption condition adjustment unit 58 calculates a heating temperature and a desorption duration when the desorption treatment is performed by the desorption unit 23, based on the information on the acquired adsorption amount of the recovery target gas and the moisture amount. The heating temperature is a temperature at which the desorption treatment is performed by the desorption unit 23. The desorption duration is a period during which the desorption treatment is performed by the desorption unit 23 at a predetermined heating temperature. The heating temperature is set, for example, as a plurality of reference temperatures, and one of the temperatures is selected. Then, the desorption condition adjustment unit 58 calculates a desorption duration at the selected heating temperature.

In addition, the desorption condition adjustment unit 58 according to the present embodiment determines whether at least one of the acquired adsorption amount of the recovery target gas and the acquired moisture amount exceeds a reference. For example, the desorption condition adjustment unit 58 determines whether the moisture amount exceeds the reference moisture amount. When the moisture amount exceeds the reference moisture amount, a high temperature is selected from among a plurality of heating temperatures set in advance. In addition, when the moisture amount does not exceed the reference moisture amount, a low temperature is selected from among a plurality of heating temperatures set in advance. Thereafter, the desorption condition adjustment unit 58 calculates the desorption duration at the selected heating temperature.

The desorption condition adjustment unit 58 sends, to the desorption unit 23, an instruction to perform the desorption treatment for the calculated desorption duration and at the selected temperature. Accordingly, when the acquired adsorption amount of the recovery target gas and the moisture amount contained in the reactant RS increase, the desorption unit 23 increases the desorption duration and performs the desorption treatment. In addition, when the acquired adsorption amount of the recovery target gas and the moisture amount contained in the reactant RS decrease, the desorption unit 23 decreases the desorption duration and performs the desorption treatment.

The heating temperature, which is one of the desorption conditions, is not limited to being selected and determined from among a plurality of preset heating temperatures. The heating temperature may be calculated and determined as any temperature. Therefore, the desorption condition adjustment unit 58 may send, to the desorption unit 23, an instruction to change the heating temperature to any heating temperature and change the desorption duration to a desorption duration corresponding to the heating temperature. Furthermore, when the heating temperature is calculated as any temperature, it is not necessary to determine whether at least one of the adsorption amount of the recovery target gas and the moisture amount exceeds a reference. That is, the heating temperature and the desorption duration may be directly calculated based on the acquired adsorption amount of the recovery target gas and the acquired moisture amount without determining the adsorption amount of the recovery target gas and the moisture amount.

In addition, when the desorption condition adjustment unit 58 determines at least one of the adsorption amount of the recovery target gas and the moisture amount, the desorption condition adjustment unit 58 is not limited to determining only the moisture amount as in the present embodiment. The desorption condition adjustment unit 58 may determine only the adsorption amount of the recovery target gas, or may determine both the adsorption amount of the recovery target gas and the moisture amount.

The backwash condition adjustment unit 59 adjusts backwash conditions for the dust collection filter 13 based on information on the adsorption amount of the recovery target gas calculated and acquired by the adsorption state adjustment unit. For example, the backwash condition adjustment unit 59 calculates a time required for the adsorption amount of the recovery target gas to reach the filter recovery target gas reference value. The backwash condition adjustment unit 59 determines, as backwash conditions, a backwashing duration (an interval at which backwashing is performed) based on the calculated time. The backwash condition adjustment unit 59 sends, to the backwash device 14, an instruction to perform backwashing at the determined backwashing duration. Accordingly, when the acquired concentration of the recovery target gas in the gas EG increases, the backwash device 14 decreases the backwashing duration at which backwashing is performed. As a result, the number of times backwashing is performed is increased. In addition, when the acquired concentration of the recovery target gas in the gas EG decreases, the backwash device 14 increases the backwashing duration at which backwashing is performed. As a result, the number of times backwashing is performed is decreased.

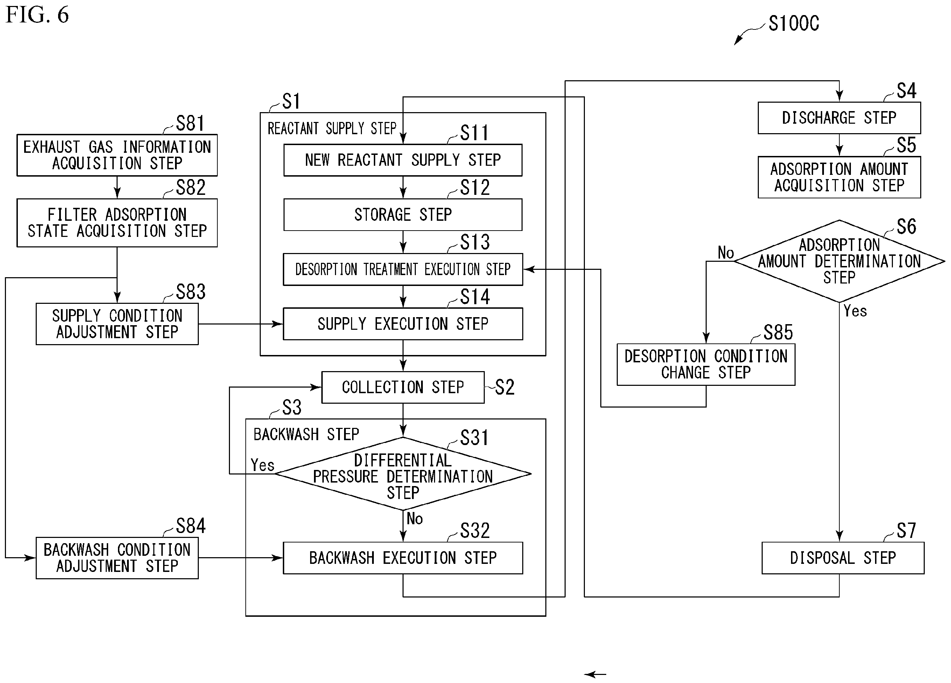

Next, a gas treatment facility method S100C using the gas treatment facility 100C will be described. In the gas treatment facility method S100C according to the fourth embodiment, as shown in FIG. 6, the gas information acquisition unit 7 acquires the concentration of the recovery target gas in the gas EG flowing through the gas line 2 and the humidity of the gas EG (S81: gas information acquisition step). Specifically, the concentration, the humidity, the temperature, the pressure, and the gas flow rate of the recovery target gas in the gas EG before the reactant RS is supplied are measured. The information on the acquired concentration of the recovery target gas in the gas EG, the information on the acquired humidity of the gas EG, the information on the acquired pressure of the gas EG, the information on the acquired gas flow rate of the gas EG, and the information on the acquired temperature are delivered to the control unit 5C.

In the control unit 5C, an adsorption amount of the recovery target gas and an adsorption amount of moisture (moisture amount) on the reactant RS collected by the dust collection filter 13 are calculated and acquired based on information on the concentration of the recovery target gas, information on humidity, information on a gas flow rate, information on pressure of the gas EG, and information on temperature (S82: filter adsorption state acquisition step). In the filter adsorption state acquisition step S82, information on the concentration of the recovery target gas in the gas EG, information on humidity of the gas EG, information on pressure of the gas EG, information on a gas flow rate of the gas EG, and information on temperature are acquired from the gas information acquisition unit 7. In the filter adsorption state acquisition step S82, the adsorption amount of the recovery target gas on the reactant RS in the dust collection filter 13 is calculated by the filter adsorption state acquisition unit 56 based on the information on the concentration of the recovery target gas, information on humidity, information on pressure of the gas EG, information on temperature, and information on the gas flow rate of the gas EG. Furthermore, in the filter adsorption state acquisition step S82, the moisture amount on the reactant RS in the dust collection filter 13 is calculated based on the information on humidity, information on the gas flow rate of the gas EG, information on the concentration of the gas EG, information on pressure of the gas EG, and information on temperature.

Based on the information on the adsorption amount of the recovery target gas acquired in the filter adsorption state acquisition step S82, the supply amount of the reactant RS from the supply unit 22 into the gas EG in the supply execution step S14 is adjusted (S83: supply condition adjustment step). In the supply condition adjustment step S83, the supply condition adjustment unit 57 calculates the supply amount of the reactant RS at which the filter recovery target gas reference value is reached. Thereafter, an instruction is sent to the supply unit 22 to supply the reactant RS in the calculated supply amount in the supply execution step S14. Accordingly, in the supply execution step S14, when the acquired concentration of the recovery target gas in the gas EG increases, the acquired humidity decreases, the acquired flow rate increases, the acquired pressure decreases, or the acquired temperature rises, the supply amount of the reactant RS to the gas line 2 increases. In addition, in the supply execution step S14, when the acquired concentration of the recovery target gas in the gas EG decreases, the acquired humidity increases, the acquired flow rate decreases, the acquired pressure increases, or the acquired temperature decreases, the supply amount of the reactant RS to the gas line 2 decreases.

Based on the information on the adsorption amount of the recovery target gas acquired in the filter adsorption state acquisition step S82, backwash conditions for the dust collection filter 13 in the backwash execution step S32 are adjusted (S84: backwash condition adjustment step). In the backwash condition adjustment step S84, the backwash condition adjustment unit 59 calculates a time required for the adsorption amount of the recovery target gas to reach the filter recovery target gas reference value. Thereafter, the backwashing duration is determined based on the calculated time. In the backwash condition adjustment step S84, an instruction is sent to the backwash device 14 so that backwashing at the determined backwashing duration is performed in the backwash execution step S32. As a result, in the backwash execution step S32, when the acquired concentration of the recovery target gas in the gas EG increases, the backwashing duration for performing the next backwashing is reduced. In addition, in the backwash execution step S32, when the acquired concentration of the recovery target gas in the gas EG decreases, the backwashing duration for performing the next backwashing is increased.

Based on the information on the adsorption amount of the recovery target gas and the moisture amount acquired in the filter adsorption state acquisition step S82, conditions for performing the desorption treatment are adjusted (S85: desorption condition adjustment step). The desorption condition adjustment step S85 is performed after the adsorption amount determination step S6 when it is determined that the adsorption amount exceeds the adsorption amount reference value. In the desorption condition adjustment step S85, the desorption condition adjustment unit 58 calculates the heating temperature and the desorption duration when the desorption treatment is performed in the desorption step, based on the information on the acquired adsorption amount and moisture amount of the recovery target gas. In the desorption condition adjustment step S85, the desorption duration at the calculated heating temperature is calculated. In the desorption condition adjustment step S85, an instruction is sent to the desorption unit 23 so that, in the desorption treatment execution steps S13 and S13E, the desorption treatment is performed for the calculated desorption duration and at the selected temperature. Accordingly, in the desorption treatment execution step S13, when the acquired adsorption amount of the recovery target gas and the moisture amount contained in the reactant RS increase, a duration of the desorption treatment is increased, and the desorption treatment is performed. In addition, in the desorption treatment execution step S13, when the acquired adsorption amount of the recovery target gas and the moisture amount contained in the reactant RS decrease, the duration of the desorption treatment is decreased, and the desorption treatment is performed.

In the adsorption state adjustment step, the heating temperature, which is one of the desorption conditions, may be selected and determined from among a plurality of preset heating temperatures, or may be calculated and determined as any temperature. Therefore, in the desorption condition adjustment step S85, an instruction may be sent to the desorption unit 23 to change the heating temperature to any heating temperature and change the desorption duration to a desorption duration corresponding to the heating temperature. In addition, when the heating temperature is selected from among a plurality of preset heating temperatures, whether at least one of the adsorption amount of the recovery target gas and the moisture amount exceeds a reference may be determined. Furthermore, when the heating temperature is calculated as any temperature, it is not necessary to determine whether at least one of the adsorption amount of the recovery target gas and the moisture amount exceeds a reference.

### (Operational Effects)

In the gas treatment facility 100C and the gas treatment facility method S100C according to the fourth embodiment, the gas information acquisition unit 7 acquires the information on the concentration of the recovery target gas in the gas EG flowing through the gas line 2, the information on the humidity of the gas EG, the information on the pressure of the gas EG, the information on the temperature, and the information on the gas flow rate of the gas EG. Then, the filter adsorption state acquisition unit 56 acquires the adsorption amount of the recovery target gas and the adsorption amount of the moisture (moisture amount) to the reactant RS in the dust collection filter 13 based on the information on the concentration of the recovery target gas in the gas EG, the information on the humidity of the gas EG, the information on the pressure of the gas EG, the information on the temperature, and the information on the gas flow rate of the gas EG. Based on the information on the acquired adsorption amount of the recovery target gas, the supply amount of the reactant RS from the supply unit 22 to the gas EG is adjusted. Specifically, when the acquired concentration of the recovery target gas in the gas EG decreases, the acquired humidity increases, the acquired flow rate decreases, the acquired pressure increases, or the acquired temperature decreases, the supply amount of the reactant RS to the gas line 2 is reduced. In addition, when the acquired concentration of the recovery target gas in the gas EG increases, the acquired humidity decreases, the acquired flow rate increases, the acquired pressure decreases, or the acquired temperature increases, the supply amount of the reactant RS to the gas line 2 is increased. That is, the supply amount of the reactant RS to the gas EG is adjusted in response to changes in the acquired concentration of the recovery target gas, the acquired humidity of the gas EG, the acquired pressure of the gas EG, the acquired temperature, and the acquired gas flow rate of the gas EG, by the gas information acquisition unit 7. Therefore, in response to changes in the concentration, pressure, temperature, flow rate, and humidity of the recovery target gas in the gas EG flowing through the gas line 2, an amount of the reactant RS that improves adsorption efficiency can be appropriately supplied into the gas EG.

By supplying an appropriate amount of the reactant RS, the time until the dust collection filter 13 is clogged increases. As a result, an increase in differential pressure between the inlet-side space 12i and the outlet-side space 12o with respect to the dust collection filter 13 can be suppressed. Accordingly, the power of the suction blower 4 can be reduced.

Further, the backwashing conditions for the dust collection filter 13 are adjusted based on the information on the acquired adsorption amount of the recovery target gas. Specifically, when the acquired concentration of the recovery target gas in the gas EG increases, the backwashing duration by the backwash device 14 is reduced. In addition, when the acquired concentration of the recovery target gas in the gas EG decreases, the backwashing duration by the backwash device 14 is increased. Since the adsorption amount of the recovery target gas corresponds to the supply amount of the reactant RS, the frequency of performing backwashing can be suppressed in accordance with the amount of the reactant RS supplied. This makes it possible to improve the service life of the dust collection filter 13.

In addition, the conditions for performing the desorption treatment are adjusted based on the information on the acquired adsorption amount of the recovery target gas and the information on the acquired moisture amount. Specifically, when the acquired adsorption amount of the recovery target gas and the moisture amount contained in the reactant RS increase, the duration of the desorption treatment in the desorption unit 23 is increased, and the desorption treatment is performed. In addition, when the acquired adsorption amount of the recovery target gas and the moisture amount contained in the reactant RS decrease, the duration of the desorption treatment in the desorption unit 23 is decreased, and the desorption treatment is performed. Therefore, conditions of the desorption treatment necessary for the current reactant RS can be appropriately ascertained. This allows energy for performing the desorption treatment on the reactant RS to be suppressed within an appropriate range.

### <Fifth Embodiment>

Next, a gas treatment facility 100D according to a fifth embodiment of the present disclosure will be described. In the fifth embodiment described below, components common to those of the first to fourth embodiments are denoted by the same reference signs in the drawings, and descriptions thereof will be omitted. In the fifth embodiment, a configuration for separating foreign matter in the gas EG before supplying the reactant RS to the gas EG differs from the first embodiment to the fourth embodiment.

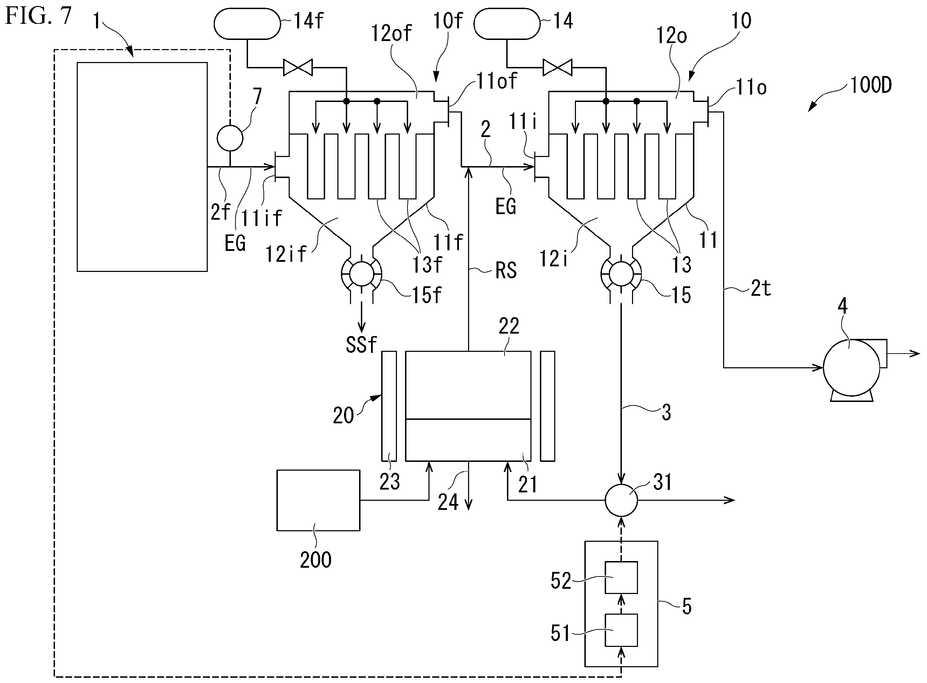

As shown in FIG. 7, the gas treatment facility 100D according to the fifth embodiment is configured to separate foreign matter in the gas EG at a position upstream of the reactant supplier 20 in a flow direction of the gas EG. The gas treatment facility 100D according to the fifth embodiment further includes an upstream dust collection filter device 10f and an upstream gas line 2f.

The upstream dust collection filter device 10f is disposed at a position upstream of the reactant supplier 20 in the flow direction of the gas EG. That is, after passing through the upstream dust collection filter device 10f, the gas EG is supplied with the reactant RS from the reactant supplier 20 and reaches the dust collection filter device 10. The upstream dust collection filter device 10f includes an upstream case 11f, an upstream dust collection filter 13f, an upstream backwash device 14f, and an upstream discharger 15f.

The upstream dust collection filter device 10f has the same configuration as the dust collection filter device 10 in the first embodiment. Accordingly, the upstream case 11f has the same configuration as the case 11. Therefore, the upstream case 11f is formed with an upstream inlet 11if through which gas flows in, corresponding to the inlet 11i, and an upstream outlet 11of through which gas flows out, corresponding to the outlet 11o. In addition, the upstream dust collection filter 13f has the same configuration as the dust collection filter 13. The upstream dust collection filter 13f is disposed to partition an internal space of the upstream case 11f into an upstream inlet-side space 12if, which is a space within the upstream case 11f located closer to the upstream inlet 11if than the upstream dust collection filter 13f and an upstream outlet-side space 12of, which is a space within the upstream case 11f located closer to the upstream outlet 11of than the upstream dust collection filter 13f. The upstream backwash device 14f has the same configuration as the backwash device 14. The upstream discharger 15f has the same configuration as the discharger 15.

One end of the upstream gas line 2f is connected to the gas generation source 1. The other end of the upstream gas line 2f is connected to the upstream inlet 11if of the upstream dust collection filter device 10f. Accordingly, the upstream gas line 2f is configured to guide the upstream gas EGf, which is the gas EG from the gas generation source 1, into the upstream dust collection filter device 10f.

In addition, one end of the gas line 2 according to the fifth embodiment is connected to the upstream outlet 11of of the upstream dust collection filter device 10f. Accordingly, the gas line 2 is configured to guide the gas EG that has passed through the upstream dust collection filter device 10f into the dust collection filter device 10.

The reactant supplier 20 supplies the reactant RS into the gas EG that has passed through the upstream dust collection filter device 10f. Specifically, the reactant supplier 20 supplies the reactant RS into the gas line 2 between the upstream dust collection filter device 10f and the dust collection filter device 10.

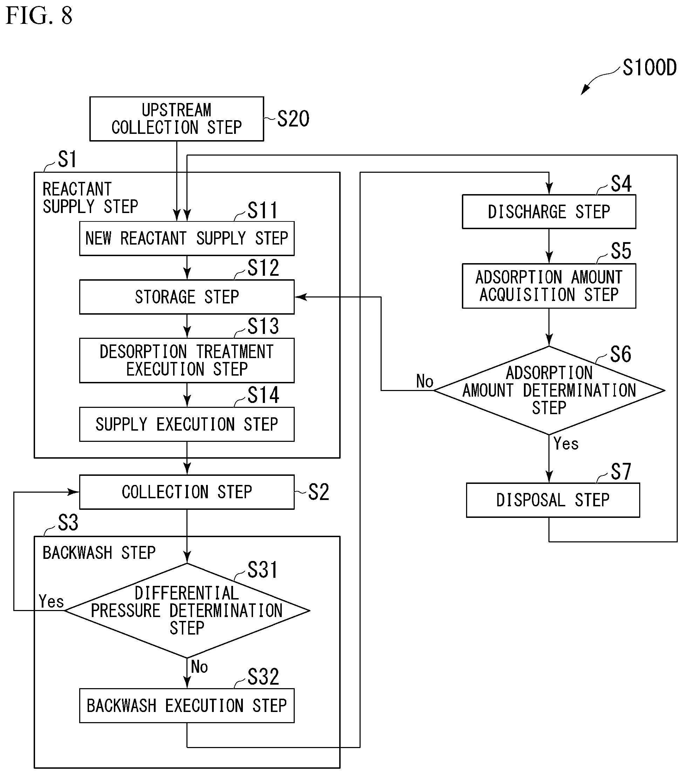

Next, a gas treatment facility method S100C using the gas treatment facility 100D will be described. In a gas treatment facility method S100D according to the fifth embodiment, the gas EG delivered from the gas generation source 1 flows into the upstream inlet-side space 12if of the upstream dust collection filter device 10f through the upstream gas line 2f. As a result, solids such as foreign matter in the gas EG are collected by the upstream dust collection filter 13f (S20: upstream collection step). As shown in FIG. 8, the upstream collection step S20 is performed before the reactant supply step S1. The gas EG that has flowed out from the upstream dust collection filter device 10f is sent to the gas line 2.

In the fifth embodiment, the reactant RS is supplied from the reactant supplier 20 to the gas line 2, but the reactant RS may also be supplied to the upstream gas line 2f. That is, the reactant supplier 20 connected to the upstream gas line 2f may be further disposed. In this case, for example, by supplying, for example, an adsorbent such as activated carbon to the upstream gas line 2f, a specific recovery target gas can also be separated.

### (Operational Effects)

In the gas treatment facility 100D and the gas treatment facility method S100D according to the fifth embodiment, the gas EG before the reactant RS is supplied is supplied to the upstream dust collection filter device 10f. Therefore, solids such as foreign matter contained in the gas EG are collected by the upstream dust collection filter device 10f. Accordingly, the exhaust gas to which the reactant RS formed in powder form is supplied is in a state containing almost no solids. By supplying the reactant RS formed in powder form to such exhaust gas, the recovery target gas in the gas EG can be adsorbed and separated very effectively. Further, the flue gas to which the reactant RS is supplied is delivered to the dust collection filter device 10. Therefore, almost no solids adhere to the dust collection filter 13 of the dust collection filter device 10, and only the reactant RS formed in powder form adheres thereto. Accordingly, the reactant RS recovered from the dust collection filter device 10 by backwashing is also in a state containing almost no foreign matter. This makes it possible to avoid an apparent decrease in performance due to mixing of solids other than the reactant RS and prevent unnecessary disposal of the reactant RS. Therefore, the reactant RS formed in powder form in a good state can be efficiently recycled.

### <Sixth Embodiment>

Next, a gas treatment facility 100E according to a sixth embodiment of the present disclosure will be described. In the sixth embodiment described below, components common to those of the first to fifth embodiments are denoted by the same reference signs in the drawings, and descriptions thereof will be omitted. In the sixth embodiment, a configuration in which the reactant supplier 20A does not include the desorption unit 23 differs from the first to fifth embodiments.

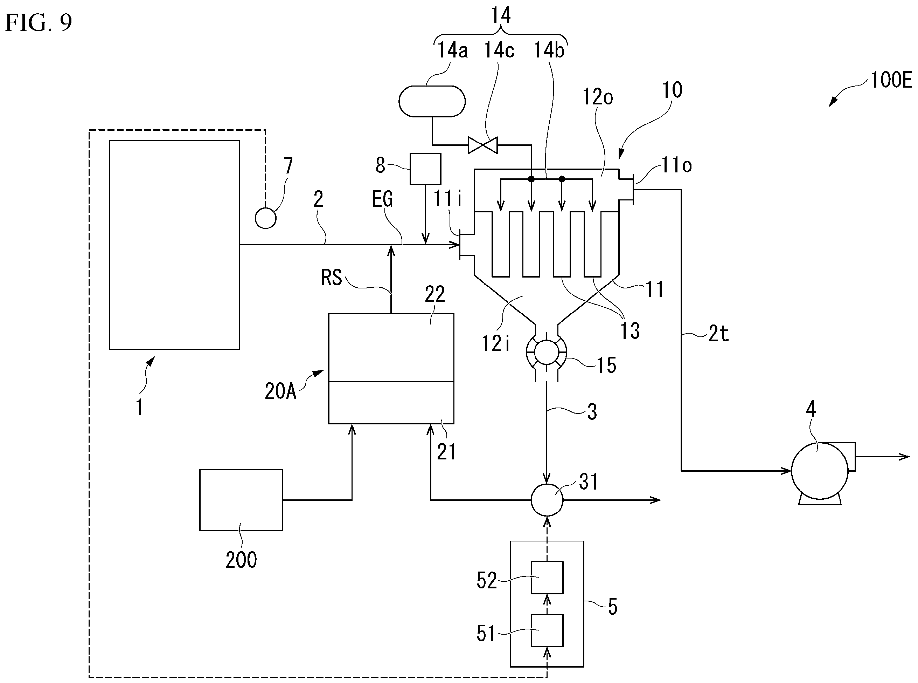

As shown in FIG. 9, in the gas treatment facility 100E according to the sixth embodiment, the reactant RS in a state of being stored in the storage unit 21 is not subjected to the desorption treatment. In the exhaust gas treatment facility, the desorption treatment is performed by heating the reactant RS collected by the dust collection filter 13 with desorption gas. The gas treatment facility 100E further includes a desorption gas supply unit 8. The desorption gas supply unit 8 supplies, to the dust collection filter 13, desorption gas having a temperature higher than a temperature of the gas EG flowing through the gas line 2. The desorption gas supply unit 8 according to the present embodiment supplies the desorption gas to the gas line 2 such that the fluid supplied to the gas line 2 is switched from the gas EG to the desorption gas after the reactant RS is supplied. That is, the desorption gas supply unit 8 supplies the desorption gas to the gas line 2 between the reactant supplier 20A and the dust collection filter device 10. As the desorption gas in the present embodiment, water vapor or the recovered recovery target gas is supplied. In the present embodiment, when the gas EG, which is a low-temperature gas, is supplied, the reactant RS formed in powder form is supplied from the supply unit 22 to the gas line 2. As a result, the gas EG is adsorbed and separated on a surface of the dust collection filter 13. Thereafter, without performing backwashing, the gas EG is switched to the desorption gas, which is a high-temperature gas, and the desorption gas is supplied from the desorption gas supply unit 8 to the gas line 2 instead of the gas EG. As a result, on the surface of the dust collection filter 13, the gas EG adsorbed on the reactant RS is desorbed and recovered through the treated gas line 2t. Thereafter, supply of the desorption gas from the desorption gas supply unit 8 is stopped, backwashing is performed, and the reactant RS is recovered. Then, the gas EG is supplied again to the gas line 2, and the reactant RS is supplied. In this manner, a cycle of supplying the reactant RS while switching supply between the gas EG and the desorption gas is repeated. In addition, in the present embodiment, gas of the recovered recovery target gas is obtained via the treated gas line 2t.

In addition, the reactant supplier 20A according to the sixth embodiment does not include the desorption unit 23. That is, the reactant supplier 20A has only the storage unit 21 and the supply unit 22. Therefore, in a gas treatment facility method S100E according to the sixth embodiment, in the desorption treatment execution step, as the desorption treatment, the desorption gas is supplied to the dust collection filter 13, and the reactant RS collected by the dust collection filter 13 is heated by the desorption gas.

### (Operational Effects)

In the gas treatment facility 100E and the gas treatment facility method S100E according to the sixth embodiment, the desorption gas supply unit 8 supplies the desorption gas having a higher temperature than the gas EG flowing through the gas line 2. Therefore, the reactant RS collected by the dust collection filter 13 is heated by the desorption gas and subjected to the desorption treatment. Therefore, the desorption treatment can be directly performed on the reactant RS in a state of adhering to the dust collection filter 13. Further, the reactant supplier 20A does not include the desorption unit 23. Therefore, it is not necessary to heat the reactant supplier 20A such as the storage unit 21 or the supply unit 22. This makes it possible to suppress installation costs of heating equipment.

### (Other Embodiments)

The embodiment of the present disclosure has been described in detail with reference to the accompanying drawings; however, the specific configuration is not limited to the embodiment, and design changes and the like are also included within the scope that does not deviate from the gist of the present disclosure.

In the gas treatment facility 100 according to the present embodiment, the type of the recovery target gas is not limited, and various gas components can be selectively collected by changing the type of the adsorbent.

The desorption unit 23 is not limited to performing heating as the desorption treatment. The desorption unit 23 may use another method as long as the recovery target gas can be desorbed from the reactant RS. For example, the desorption unit 23 may decompress the reactant RS and desorb the recovery target gas from the reactant RS.

In addition, even when heating is performed by the desorption unit 23, the desorption unit 23 may have any configuration as long as the reactant RS formed in powder form can be heated. For example, the desorption unit 23 may have a structure capable of heating by a heat exchanger using gas exhaust heat or a high-temperature fluid such as hot water or water vapor, microwave heating, Joule heating by energization, dielectric heating, or the like. Furthermore, the desorption unit 23 may indirectly heat the reactant RS formed in powder form from outside the storage unit 21 or the supply unit 22, or may directly heat the reactant RS formed in powder form from inside the storage unit 21 or the supply unit 22. As a structure for indirectly heating the reactant RS formed in powder form, for example, a kiln or a shell-and-tube may be applied. As a structure for directly heating the reactant RS formed in powder form, a fluidized bed may be applied.

In addition, the reactant RS recovered by the dust collection filter device 10 is not limited to a structure in which a destination is switched by the control units 5 and 5C and the delivery destination switching unit 31. For example, the control units 5 and 5C may be omitted, and switching by the delivery destination switching unit 31 may be performed by an operator.

In the present embodiment, the reactant supplier 20 supplies the reactant RS into the gas line 2, but a supply destination of the reactant RS is not limited to the gas line 2. The reactant supplier 20 needs only be capable of supplying the reactant RS into the gas line 2 or into the inlet-side space 12i. Therefore, the reactant supplier 20 may have a configuration in which the reactant RS is directly supplied into the inlet-side space 12i.

In the embodiments, an example has been shown in which information on a concentration of the recovery target gas, humidity of the gas, a flow rate of the gas, pressure of the gas, and temperature of the gas is input, but input of all pieces of information is not necessarily essential, and at least one piece of information need only be input. Therefore, for example, one or more pieces of information among these pieces of information may be input. In addition, information other than these pieces of information that contributes to adjustment of the supply amount of the reactant may be used as an alternative.

In the embodiments, an example has been shown in which calculation of the adsorption amounts of the target gas and moisture is performed based on information on a concentration of the recovery target gas, humidity of the gas, a flow rate of the gas, pressure of the gas, and temperature of the gas, but input of all pieces of information is not necessarily essential, and at least one piece of information need only be input. Therefore, for example, one or more pieces of information among these pieces of information may be input. In addition, information other than these pieces of information that contributes to calculation of the adsorption amounts of the target gas and moisture may be alternatively used for the calculation.

### <Supplementary Note>

The gas treatment facilities 100, 100A, 100B, 100C, 100D, and 100E and the gas treatment facility methods S100, S100A, S100B, S100C, S100D, and S100E described in each of the embodiments are understood as follows, for example.
(1) A first aspect relates to a gas treatment facility 100, 100A, 100B, 100C, 100D, 100E including: a dust collection filter device 10; a gas line 2 configured to introduce a gas EG containing a recovery target gas into the dust collection filter device 10; and a reactant supplier 20 configured to supply, into the gas EG, a reactant RS formed in powder form capable of reacting with the recovery target gas, in which the dust collection filter device 10 includes a case 11 in which an inlet 11i through which the gas flows in and an outlet 11o through which the gas flows out are formed, and a dust collection filter 13 configured to partition an internal space of the case 11 into an inlet-side space 12i, which is a space within the case 11 on a side of the inlet 11i and an outlet-side space 12o , which is a space within the case 11 on a side of the outlet 11o, the gas line 2 is connected to the inlet 11i of the dust collection filter device 10, and the reactant supplier 20 is configured to supply, to the gas line 2 or the inlet-side space 12i, the reactant RS subjected to desorption treatment for desorbing, from the reactant RS, the recovery target gas reacted with and adsorbed on the reactant RS.
   With such a configuration, in the reactant RS formed in powder form, a specific surface area is extremely large compared with a reactant RS having a large particle size such as pellets or a reactant RS coated on a base material such as a honeycomb coat type and formed into a large lump. Therefore, by supplying the reactant RS formed in powder form to the gas EG, the recovery target gas in the gas EG is effectively adsorbed and separated. Furthermore, when the recovery target gas is desorbed from the reactant RS that has adsorbed the recovery target gas, desorption treatment needs to be performed on the reactant RS. On the other hand, in the present embodiment, the desorption treatment is performed on the reactant RS formed in powder form. Since the desorption treatment is performed while the reactant RS is in a powdery form, the energy required for performing the desorption treatment on the reactant RS is suppressed. As a result, the recovery target gas in the gas EG can be separated while suppressing the loss.
(2) A second aspect relates to the gas treatment facility 100, 100A, 100B, 100C, 100D, 100E according to (1), in which the reactant supplier 20 is configured to, as the desorption treatment, heat the reactant RS formed in powder form to a temperature higher than a temperature of the gas EG flowing through the gas line 2.
   With such a configuration, the reactant RS for which the desorption treatment has been completed is cooled by the flowing gas EG by being supplied to the gas line 2. Therefore, by cooling the reactant RS that has been heated to a high temperature by completing the desorption treatment, the adsorption effect of the recovery target gas can be improved. In addition, the reactant RS can be cooled merely by supplying the reactant RS into the gas EG flowing through the gas line 2, without preparing a new device for cooling the reactant RS. This makes it possible to improve adsorption performance of the recovery target gas while completing the desorption treatment on the reactant RS with high accuracy and suppressing cost.
(3) A third aspect relates to the gas treatment facility 100, 100A, 100B, 100C, 100D, 100E according to (1), further including: a desorption gas supply unit 8 configured to supply, to the dust collection filter 13, a desorption gas having a temperature higher than a temperature of the gas EG flowing through the gas line 2, in which, in the desorption treatment, the reactant RS collected by the dust collection filter 13 is heated by at least one of the desorption gas and water vapor.
   With such a configuration, the reactant RS collected by the dust collection filter 13 is heated by the desorption gas and subjected to the desorption treatment. Therefore, the desorption treatment can be directly performed on the reactant RS in a state of adhering to the dust collection filter 13.
(4) A fourth aspect relates to the gas treatment facility 100, 100A, 100B, 100C, 100D, 100E according to any one of (1) to (3), in which the dust collection filter device 10 includes a backwash device 14 configured to deliver a high-pressure gas to the outlet-side space 12o such that the outlet-side space 12o has a pressure higher than a pressure of the inlet-side space 12i and detach the reactant RS collected by the dust collection filter 13 from the dust collection filter 13, and a discharger 15 configured to discharge the reactant RS in the inlet-side space 12i that has been detached from the dust collection filter 13 out of the dust collection filter device 10, and further includes a reactant return line 3 connecting the discharger 15 and the reactant supplier 20 and configured to supply the reactant RS discharged from the discharger 15 to the reactant supplier 20.
   With such a configuration, the reactant RS in a state of having sufficiently adsorbed the recovery target gas can be recovered from the dust collection filter 13. The reactant RS in a state of having adsorbed the recovery target gas is subjected to the desorption treatment while being stored in the reactant supplier 20, and the recovery target gas is separated. Therefore, the reactant RS in a state in which the recovery target gas has been sufficiently desorbed can be supplied again to the gas line 2. This makes it possible to recycle the reactant RS formed in powder form and suppress an amount of use of the reactant RS.
(5) A fifth aspect relates to the gas treatment facility 100, 100A, 100B, 100C, 100D, 100E according to (4), further including: an adsorption amount acquisition unit 51 configured to acquire an adsorption amount of the recovery target gas adsorbed on the reactant RS discharged by the discharger 15; and an adsorption amount determination unit 52 configured to determine whether the adsorption amount acquired by the adsorption amount acquisition unit 51 is below a predetermined adsorption amount reference value, in which the reactant RS discharged by the discharger 15 is supplied to the reactant supplier 20 when the adsorption amount determination unit 52 determines that the adsorption amount exceeds the adsorption amount reference value, and a new reactant RS is supplied to the reactant supplier 20 when the adsorption amount determination unit 52 determines that the adsorption amount is below the adsorption amount reference value.
   With such a configuration, the performance of the reactant RS can be evaluated based on an adsorption amount of the recovery target gas adsorbed on the reactant RS discharged from the discharger 15. Therefore, it becomes easy to discard the reactant RS having degraded performance and switch a timing for supplying a new reactant RS. This makes it possible to continue operation of supplying, into the gas EG in the gas line 2, the reactant RS for which adsorption performance is constantly maintained.
(6) A sixth aspect relates to the gas treatment facility 100, 100A, 100B, 100C, 100D, 100E according to (4) or (5), in which the backwash device 14 is configured to set a temperature of the high-pressure gas to a temperature equal to or lower than a temperature of the gas EG flowing through the gas line 2, or set humidity of the high-pressure gas to humidity higher than humidity of the gas EG flowing through the gas line 2.
   With such a configuration, the reactant RS adhering to the dust collection filter 13 is cooled by backwashing, and adsorption performance of the reactant RS is improved. Therefore, even during backwashing, the adsorption effect of the recovery target gas can be improved. In addition, in a case where the reactant RS has a characteristic that adsorption performance is improved in the presence of moisture, as in an amine-based compound, and the target to be adsorbed is the recovery target gas, the reactant RS adhering to the dust collection filter 13 is brought into a high-humidity state by backwashing, and the adsorption performance of the reactant RS is improved. Therefore, during backwashing, the adsorption effect of the recovery target gas can be further improved.
(7) A seventh aspect relates to the gas treatment facility 100, 100A, 100B, 100C, 100D, 100E according to any one of (1) to (6), in which the reactant supplier 20 is configured to cool the reactant RS formed in powder form to a temperature equal to or lower than a temperature of the gas EG, and supply the cooled reactant RS into the gas EG.
   With such a configuration, when the target to be adsorbed on the reactant RS is the recovery target gas, the adsorption effect of the recovery target gas can be particularly improved by cooling the reactant RS that has reached a high temperature sufficient for completing the desorption treatment to a low temperature equal to or lower than a temperature of the gas EG. In addition, when humidified gas is mixed with the reactant RS during cooling, humidity of the reactant RS increases. As a result, the adsorption effect of the recovery target gas can be further improved.
(8) An eighth aspect relates to the gas treatment facility 100, 100A, 100B, 100C, 100D, 100E according to any one of (1) to (7), further including: a gas information acquisition unit 7 configured to acquire at least one of a concentration of the recovery target gas, humidity of the gas EG, a flow rate of the gas EG, a pressure of the gas EG, and a temperature of the gas EG, in the gas EG flowing through the gas line 2, in which the reactant supplier 20 is configured to adjust a supply amount of the reactant RS into the gas EG such that the supply amount of the reactant RS is increased when the acquired concentration of the recovery target gas in the gas EG increases, the acquired humidity of the gas EG decreases, the acquired flow rate of the gas EG increases, the acquired pressure of the gas EG decreases, or the acquired temperature of the gas EG rises, and the supply amount of the reactant RS is decreased when the acquired concentration of the recovery target gas in the gas EG decreases, the acquired humidity of the gas EG increases, the acquired flow rate of the gas EG decreases, the acquired pressure of the gas EG increases, or the acquired temperature of the gas EG decreases.
   With such a configuration, the supply amount of the reactant RS into the gas EG is adjusted in response to changes in the acquired concentration of the recovery target gas, humidity of the gas EG, flow rate of the gas EG, pressure of the gas EG, and temperature of the gas EG. Therefore, in response to changes in the concentration of the recovery target gas and humidity of the gas EG flowing through the gas line 2, an amount of the reactant RS that improves adsorption efficiency can be appropriately supplied into the gas EG.
(9) A ninth aspect relates to the gas treatment facility 100, 100A, 100B, 100C, 100D, 100E according to (1), further including: a filter adsorption state acquisition unit 56 configured to acquire an adsorption amount of the recovery target gas adsorbed on the reactant RS collected by the dust collection filter 13 and a moisture amount contained in the reactant RS, based on at least one of the acquired concentration of the recovery target gas in the gas EG, humidity of the gas EG, flow rate of the gas EG, pressure of the gas EG, and temperature of the gas EG, in which the reactant supplier 20 is configured to adjust a duration of the desorption treatment such that the duration of the desorption treatment is increased when the acquired adsorption amount of the recovery target gas and the moisture amount contained in the reactant RS increase, and the duration of the desorption treatment is decreased when the acquired adsorption amount of the recovery target gas and the moisture amount contained in the reactant RS decrease.
   With such a configuration, conditions for performing the desorption treatment are adjusted based on the information on the acquired adsorption amount of the recovery target gas and information on the acquired moisture amount. Therefore, conditions of the desorption treatment necessary for the current reactant RS can be appropriately ascertained. This allows energy for performing the desorption treatment on the reactant RS to be suppressed within an appropriate range.
(10) A tenth aspect relates to the gas treatment facility 100, 100A, 100B, 100C, 100D, 100E according to any one of (1) to (9), further including: an upstream dust collection filter device 10f disposed at a position upstream with respect to the reactant supplier 20 in a flow direction of the gas EG; and an upstream gas line 2f configured to introduce, into the upstream dust collection filter device 10f, the gas EG before the reactant RS is supplied, in which the upstream dust collection filter device 10f includes an upstream case 11f in which an upstream inlet 11if through which the gas flows in and an upstream outlet 11of through which the gas flows out are formed, and an upstream dust collection filter 13f having heat resistance and configured to partition an internal space of the upstream case 11f into an upstream inlet-side space 12if, which is a space within the upstream case 11f on a side of the upstream inlet 11if of the upstream dust collection filter device 10f and an upstream outlet-side space 12of, which is a space within the upstream case 11f on a side of the upstream outlet 11of of the upstream dust collection filter device 10f, the upstream gas line 2f is connected to the upstream inlet 11if of the upstream dust collection filter device 10f, and the reactant supplier 20 is configured to supply the reactant RS into the gas EG that has passed through the upstream dust collection filter device 10f.
   With such a configuration, solids such as foreign matter contained in the gas EG are collected by the upstream dust collection filter device 10f. Accordingly, the exhaust gas to which the reactant RS formed in powder form is supplied is in a state containing almost no solids. By supplying the reactant RS formed in powder form to such exhaust gas, the recovery target gas in the gas EG can be adsorbed and separated very effectively. Further, the flue gas to which the reactant RS is supplied is delivered to the dust collection filter device 10. Therefore, almost no solids adhere to the dust collection filter 13 of the dust collection filter device 10, and only the reactant RS formed in powder form adheres thereto. Accordingly, the reactant RS recovered from the dust collection filter device 10 by backwashing is also in a state containing almost no foreign matter. This makes it possible to avoid an apparent decrease in performance due to mixing of solids other than the reactant RS and prevent unnecessary disposal of the reactant RS. Therefore, the reactant RS formed in powder form in a good state can be efficiently recycled.
(11) An eleventh aspect relates to a gas treatment facility method S100, S100A, S100B, S100C, S100D, S100E including: a reactant supply step S1, S1A of supplying, to a gas EG flowing through a gas line 2 and containing a recovery target gas, a reactant RS formed in powder form capable of reacting with the recovery target gas; and a collection step S20 of collecting, using a dust collection filter device 10 including a dust collection filter 13, the reactant RS formed in powder form that has flowed into the dust collection filter device 10, in which, in the reactant supply step S1, S1A, the reactant RS is supplied after desorption treatment for desorbing, from the reactant RS, the recovery target gas reacted with and adsorbed on the reactant RS is performed.

With such a configuration, in the reactant RS formed in powder form, a specific surface area is extremely large compared with a reactant RS having a large particle size such as pellets or a reactant RS coated on a base material such as a honeycomb coat type and formed into a large lump. Therefore, by supplying the reactant RS formed in powder form to the gas EG, the recovery target gas in the gas EG is effectively adsorbed and separated. Furthermore, when the recovery target gas is desorbed from the reactant RS that has adsorbed the recovery target gas, desorption treatment needs to be performed on the reactant RS. In contrast, in the present embodiment, the desorption treatment is performed on the reactant RS formed in powder form. Since the desorption treatment is performed in a powdery state, energy for performing the desorption treatment on the reactant RS is suppressed.

As a result, the recovery target gas in the gas EG can be separated while suppressing the loss.

(12) A twelfth aspect relates to the gas treatment facility method S100, S100A, S100B, S100C, S100D, S100E according to (11), in which, in the reactant supply step S1, S1A, as the desorption treatment, the reactant RS formed in powder form is heated to a temperature higher than a temperature of the gas EG flowing through the gas line 2.

With such a configuration, the reactant RS for which the desorption treatment has been completed is cooled by the flowing gas EG by being supplied to the gas line 2. Therefore, by cooling the reactant RS that has been heated to a high temperature by completing the desorption treatment, the adsorption effect of the recovery target gas can be improved. In addition, the reactant RS can be cooled merely by supplying the reactant RS into the gas EG flowing through the gas line 2, without preparing a new device for cooling the reactant RS. This makes it possible to improve adsorption performance of the recovery target gas while completing the desorption treatment on the reactant RS with high accuracy and suppressing cost.

(13) A thirteenth aspect relates to the gas treatment facility method S100, S100A, S100B, S100C, S100D, S100E according to (12), in which, in the reactant supply step S1, S1A, as the desorption treatment, a desorption gas having a temperature higher than a temperature of the gas EG flowing through the gas line 2 is supplied to the dust collection filter 13, and the reactant RS collected by the dust collection filter 13 is heated by the desorption gas.

With such a configuration, the reactant RS collected by the dust collection filter 13 is heated by the desorption gas and subjected to the desorption treatment. Therefore, the desorption treatment can be directly performed on the reactant RS in a state of adhering to the dust collection filter 13.

(14) A fourteenth aspect relates to the gas treatment facility method S100, S100A, S100B, S100C, S100D, S100E according to any one of (11) to (13), further including: a backwash step S3, S3B of detaching the reactant RS collected by the dust collection filter 13 of the dust collection filter device 10 from the dust collection filter 13 by a high-pressure gas; and a discharge step S4 of discharging, from the dust collection filter device 10, the reactant RS detached from the dust collection filter 13 in the backwash step S3, S3B, in which, in the reactant supply step S1, S1A, the reactant RS discharged in the discharge step S4 is supplied.

With such a configuration, the reactant RS in a state of having sufficiently adsorbed the recovery target gas can be recovered from the dust collection filter 13. The reactant RS in a state of having adsorbed the recovery target gas is then subjected to the desorption treatment, and the recovery target gas is separated. Therefore, the reactant RS in a state of having been desorbed after sufficiently adsorbing the recovery target gas can be supplied again to the gas line 2. This makes it possible to recycle the reactant RS formed in powder form and suppress an amount of use of the reactant RS.

(15) A fifteenth aspect relates to the gas treatment facility method S100, S100A, S100B, S100C, S100D, S100E according to (14), further including: an adsorption amount acquisition step S5 of acquiring an adsorption amount of the recovery target gas adsorbed on the reactant RS discharged in the discharge step S4; and an adsorption amount determination step S6 of determining whether the adsorption amount acquired in the adsorption amount acquisition step S5 is below a predetermined adsorption amount reference value, in which, in the reactant supply step S1, S1A, the reactant RS discharged in the discharge step S4 is supplied when it is determined in the adsorption amount determination step S6 that the adsorption amount exceeds the adsorption amount reference value, and a new reactant RS is supplied when it is determined in the adsorption amount determination step S6 that the adsorption amount is below the adsorption amount reference value.

With such a configuration, the performance of the reactant RS can be evaluated based on an adsorption amount of the recovery target gas adsorbed on the reactant RS discharged in the discharge step S4. Therefore, it becomes easy to discard the reactant RS having degraded performance and switch a timing for supplying a new reactant RS. This makes it possible to continue operation of supplying, into the gas EG in the gas line 2, the reactant RS for which adsorption performance is constantly maintained.

(16) A sixteenth aspect relates to the gas treatment facility method S100, S100A, S100B, S100C, S100D, S100E according to (14) or (15), in which, in the backwash step S3, S3B, the high-pressure gas is set to a temperature equal to or lower than a temperature of the gas EG flowing through the gas line 2, or the high-pressure gas is set to humidity higher than humidity of the gas EG flowing through the gas line 2.

With such a configuration, the reactant RS adhering to the dust collection filter 13 is cooled by backwashing, and adsorption performance of the reactant RS is improved. Therefore, even during backwashing, the adsorption effect of the recovery target gas can be improved. In addition, in a case where the reactant RS has a characteristic that adsorption performance is improved in the presence of moisture, as in an amine-based compound, and the target to be adsorbed is the recovery target gas, the reactant RS adhering to the dust collection filter 13 is brought into a high-humidity state by backwashing, and the adsorption performance of the reactant RS is improved. Therefore, during backwashing, the adsorption effect of the recovery target gas can be further improved.

(17) A seventeenth aspect relates to the gas treatment facility method S100, S100A, S100B, S100C, S100D, S100E according to any one of (11) to (16), in which, in the reactant supply step S1, S1A, the reactant RS formed in powder form is cooled to a temperature equal to or lower than a temperature of the gas EG and supplied into the gas EG.

With such a configuration, when the target to be adsorbed on the reactant RS is the recovery target gas, the adsorption effect of the recovery target gas can be particularly improved by cooling the reactant RS that has reached a high temperature sufficient for completing the desorption treatment to a temperature lower than a temperature of the gas EG. In addition, when humidified gas is mixed with the reactant RS during cooling, humidity of the reactant RS increases. As a result, the adsorption effect of the recovery target gas can be further improved.

(18) An eighteenth aspect relates to the gas treatment facility method S100, S100A, S100B, S100C, S100D, S100E according to any one of (11) to (17), further including: a gas information acquisition step S81 of acquiring at least one of a concentration of the recovery target gas, humidity of the gas EG, a flow rate of the gas EG, a pressure of the gas EG, and a temperature of the gas EG, in the gas EG flowing through the gas line 2, in which, in the reactant supply step S1, S1A, a supply amount of the reactant RS into the gas EG is adjusted such that the supply amount of the reactant RS is increased when the acquired concentration of the recovery target gas in the gas EG increases, the acquired humidity of the gas EG decreases, the acquired flow rate of the gas EG increases, the acquired pressure of the gas EG decreases, or the acquired temperature of the gas EG rises, and the supply amount of the reactant RS is decreased when the acquired concentration of the recovery target gas in the gas EG decreases, the acquired humidity of the gas EG increases, the acquired flow rate of the gas EG decreases, the acquired pressure of the gas EG increases, or the acquired temperature of the gas EG decreases.

With such a configuration, the supply amount of the reactant RS into the gas EG is adjusted in response to changes in the acquired concentration of the recovery target gas, flow rate of the gas EG, pressure of the gas EG, temperature of the gas EG, or humidity of the gas EG. Therefore, in response to changes in the concentration of the recovery target gas and humidity of the gas EG flowing through the gas line 2, an amount of the reactant RS that improves adsorption efficiency can be appropriately supplied into the gas EG.

(19) A nineteenth aspect relates to the gas treatment facility method S100, S100A, S100B, S100C, S100D, S100E according to (18), further including: a filter adsorption state acquisition step S82 of acquiring an adsorption amount of the recovery target gas adsorbed on the reactant RS collected by the dust collection filter 13 and a moisture amount contained in the reactant RS, based on at least one of the acquired concentration of the recovery target gas in the gas EG, humidity of the gas EG, the acquired flow rate of the gas EG, the acquired pressure of the gas EG, and the acquired temperature of the gas EG, in which, in the reactant supply step S1, S1A, a duration of the desorption treatment is adjusted such that the duration of the desorption treatment is increased when the acquired adsorption amount of the recovery target gas and the acquired moisture amount contained in the reactant RS increase, and the duration of the desorption treatment is decreased when the acquired adsorption amount of the recovery target gas and the acquired moisture amount contained in the reactant RS decrease.

With such a configuration, conditions for performing the desorption treatment are adjusted based on the information on the acquired adsorption amount of the recovery target gas and information on the acquired moisture amount. Therefore, conditions of the desorption treatment necessary for the current reactant RS can be appropriately ascertained. This allows energy for performing the desorption treatment on the reactant RS to be suppressed within an appropriate range.

(20) A twentieth aspect relates to the gas treatment facility method S100, S100A, S100B, S100C, S100D, S100E according to any one of (11) to (19), further including: an upstream collection step S20 of collecting, using an upstream dust collection filter device 10f including an upstream dust collection filter 13f having heat resistance, a solid contained in the gas EG that has flowed into the upstream dust collection filter device 10f, before the reactant supply step S1, S1A, in which, in the reactant supply step S1, S1A, the reactant RS is supplied into the gas EG after the upstream collection step S20 is performed.

With such a configuration, solids such as foreign matter contained in the gas EG are collected by the upstream dust collection filter device 10f. Therefore, the exhaust gas to which the reactant RS formed in powder form is supplied is in a state containing almost no solids. By supplying the reactant RS formed in powder form to such an exhaust gas, the recovery target gas in the gas EG can be adsorbed and separated very effectively. Furthermore, the exhaust gas to which the reactant RS has been supplied is delivered to the dust collection filter device 10. Therefore, almost no solids adhere to the dust collection filter 13 of the dust collection filter device 10, and only the reactant RS formed in powder form adheres thereto. Therefore, the reactant RS recovered from the dust collection filter device 10 by backwashing is also in a state containing almost no foreign matter. This makes it possible to avoid an apparent decrease in performance due to mixing of solids other than the reactant RS and prevent unnecessary disposal of the reactant RS. Therefore, the reactant RS formed in powder form in a good state can be efficiently recycled.

### INDUSTRIAL APPLICABILITY

With the gas treatment facility and the gas treatment facility method according to the present disclosure, the recovery target gas in the gas can be separated while suppressing the loss.

### REFERENCE SIGNS LIST

100, 100A, 100B, 100C, 100D, 100E Gas treatment facility
1 Gas generation source
EG Gas
RS Reactant
10 Dust collection filter device
11 Case
11i Inlet
12i Inlet-side space
11o Outlet
12o Outlet-side space
13 Dust collection filter
14 Backwash device
14a Backwash high-pressure gas tank
14b High-pressure gas guide pipe
14c On-off valve
15 Discharger
2 Gas line
2t Treated gas line
4 Suction blower
20 Reactant supplier
21 Storage unit
22 Supply unit
23 Desorption unit
24 Gas discharge line
3 Reactant return line
31 Delivery destination switching unit
200 New reactant supply unit
5, 5C Control unit
51 Adsorption amount acquisition unit
52 Adsorption amount determination unit
S100, S100A, S100B, S100C, S100D, S100E Gas treatment facility method
S1, S1A Reactant supply step
S11 New reactant supply step
S12 Storage step
S13, S13E Desorption treatment execution step
S14 Supply execution step
S2 Collection step
S3, S3B Backwash step
S31 Differential pressure determination step
S32 Backwash execution step
S4 Discharge step
S5 Adsorption amount acquisition step
S6 Adsorption amount determination step
S7 Disposal step
6 Reactant cooling unit
141 Backwash gas adjustment unit
7 Gas information acquisition unit
56 Filter adsorption state acquisition unit
57 Supply condition adjustment unit58 Desorption condition adjustment unit
59 Backwash condition adjustment unit
S81 Gas information acquisition step
S82 Filter adsorption state acquisition step
S83 Supply condition adjustment step
S84 Backwash condition adjustment step
S85 Desorption condition adjustment step
10f Upstream dust collection filter device
2f Upstream gas line
11f Upstream case
11if Upstream inlet
12if Upstream inlet-side space
11of Upstream outlet
12of Upstream outlet-side space
13f Upstream dust collection filter
14f Upstream backwash device
15f Upstream discharger
S20 Upstream collection step
8 Desorption gas supply unit

## Claims

1. A gas treatment facility comprising:
a dust collection filter device;
a gas line configured to introduce a gas containing a recovery target gas into the dust collection filter device; and
a reactant supplier configured to supply, into the gas, a reactant capable of reacting with the recovery target gas and formed in powder form,
wherein the dust collection filter device includes a case in which an inlet through which the gas flows in and an outlet through which the gas flows out are formed, and a dust collection filter configured to partition an internal space of the case into an inlet-side space, which is a space within the case on a side of the inlet and an outlet-side space, which is a space within the case on a side of the outlet,
the gas line is connected to the inlet of the dust collection filter device, and
the reactant supplier is configured to supply, to the gas line or the inlet-side space, the reactant subjected to desorption treatment for desorbing, from the reactant, the recovery target gas reacted with and adsorbed on the reactant.

2. The gas treatment facility according to Claim 1,
wherein the reactant supplier is configured to, as the desorption treatment, heat the reactant formed in powder form to a temperature higher than a temperature of the gas flowing through the gas line.

3. The gas treatment facility according to Claim 2, further comprising:
a desorption gas supply unit configured to supply, to the dust collection filter, a desorption gas having a temperature higher than the temperature of the gas flowing through the gas line,
wherein, in the desorption treatment, the reactant collected by the dust collection filter is heated by at least one of the desorption gas and water vapor.

4. The gas treatment facility according to Claim 1 or 2,
wherein the dust collection filter device includes a backwash device configured to deliver a high-pressure gas to the outlet-side space such that the outlet-side space has a pressure higher than a pressure of the inlet-side space and detach the reactant collected by the dust collection filter from the dust collection filter, and a discharger configured to discharge the reactant in the inlet-side space that has been detached from the dust collection filter out of the dust collection filter device, and
the gas treatment facility further comprises a reactant return line connecting the discharger and the reactant supplier and configured to supply the reactant discharged from the discharger to the reactant supplier.

5. The gas treatment facility according to Claim 4, further comprising:
an adsorption amount acquisition unit configured to acquire an adsorption amount of the recovery target gas adsorbed on the reactant discharged by the discharger; and
an adsorption amount determination unit configured to determine whether the adsorption amount acquired by the adsorption amount acquisition unit is below a predetermined adsorption amount reference value,
wherein the reactant discharged by the discharger is supplied to the reactant supplier when the adsorption amount determination unit determines that the adsorption amount exceeds the adsorption amount reference value, and a new reactant is supplied to the reactant supplier when the adsorption amount determination unit determines that the adsorption amount is below the adsorption amount reference value.

6. The gas treatment facility according to Claim 4,
wherein the backwash device is configured to set a temperature of the high-pressure gas to a temperature equal to or lower than a temperature of the gas flowing through the gas line, or set humidity of the high-pressure gas to humidity higher than humidity of the gas flowing through the gas line.

7. The gas treatment facility according to Claim 1 or 2,
wherein the reactant supplier is configured to cool the reactant formed in powder form to a temperature equal to or lower than a temperature of the gas, and supply the cooled reactant into the gas.

8. The gas treatment facility according to Claim 1 or 2, further comprising:
a gas information acquisition unit configured to acquire at least one of a concentration of the recovery target gas, humidity of the gas, a flow rate of the gas, a pressure of the gas, and a temperature of the gas, in the gas flowing through the gas line,
wherein the reactant supplier is configured to adjust a supply amount of the reactant into the gas such that
the supply amount of the reactant is increased when the acquired concentration of the recovery target gas in the gas increases, the acquired humidity of the gas decreases, the acquired flow rate of the gas increases, the acquired pressure of the gas decreases, or the acquired temperature of the gas rises, and
the supply amount of the reactant is decreased when the acquired concentration of the recovery target gas in the gas decreases, the acquired humidity of the gas increases, the acquired flow rate of the gas decreases, the acquired pressure of the gas increases, or the acquired temperature of the gas decreases.

9. The gas treatment facility according to Claim 8, further comprising:
a filter adsorption state acquisition unit configured to acquire an adsorption amount of the recovery target gas adsorbed on the reactant collected by the dust collection filter and a moisture amount contained in the reactant, based on at least one of the acquired concentration of the recovery target gas in the gas, the acquired humidity of the gas, the acquired flow rate of the gas, the acquired pressure of the gas, and the acquired temperature of the gas,
wherein the reactant supplier is configured to adjust a duration of the desorption treatment such that
the duration of the desorption treatment is increased when the acquired adsorption amount of the recovery target gas and the acquired moisture amount contained in the reactant increase, and
the duration of the desorption treatment is decreased when the acquired adsorption amount of the recovery target gas and the acquired moisture amount contained in the reactant decrease.

10. The gas treatment facility according to Claim 1 or 2, further comprising:
an upstream dust collection filter device disposed at a position upstream with respect to the reactant supplier in a flow direction of the gas; and
an upstream gas line configured to introduce, into the upstream dust collection filter device, the gas before the reactant is supplied,
wherein the upstream dust collection filter device includes an upstream case in which an upstream inlet through which the gas flows in and an upstream outlet through which the gas flows out are formed, and an upstream dust collection filter having heat resistance and configured to partition an internal space of the upstream case into an upstream inlet-side space, which is a space within the upstream case on a side of the upstream inlet of the upstream dust collection filter device and an upstream outlet-side space, which is a space within the upstream case on a side of the upstream outlet of the upstream dust collection filter device,
the upstream gas line is connected to the upstream inlet of the upstream dust collection filter device, and
the reactant supplier is configured to supply the reactant into the gas that has passed through the upstream dust collection filter device.

11. A gas treatment facility method comprising:
a reactant supply step of supplying, to a gas flowing through a gas line and containing a recovery target gas, a reactant formed in powder form capable of reacting with the recovery target gas; and
a collection step of collecting, using a dust collection filter device including a dust collection filter, the reactant formed in powder form that has flowed into the dust collection filter device,
wherein, in the reactant supply step, the reactant is supplied after desorption treatment for desorbing, from the reactant, the recovery target gas reacted with and adsorbed on the reactant is performed.

12. The gas treatment facility method according to Claim 11,
wherein, in the reactant supply step, as the desorption treatment, the reactant formed in powder form is heated to a temperature higher than a temperature of the gas flowing through the gas line.

13. The gas treatment facility method according to Claim 12,
wherein, in the reactant supply step, as the desorption treatment, a desorption gas having a temperature higher than a temperature of the gas flowing through the gas line is supplied to the dust collection filter, and the reactant collected by the dust collection filter is heated by the desorption gas.

14. The gas treatment facility method according to Claim 11 or 12, further comprising:
a backwash step of detaching the reactant collected by the dust collection filter of the dust collection filter device from the dust collection filter by a high-pressure gas; and
a discharge step of discharging, from the dust collection filter device, the reactant detached from the dust collection filter in the backwash step,
wherein, in the reactant supply step, the reactant discharged in the discharge step is supplied.

15. The gas treatment facility method according to Claim 14, further comprising:
an adsorption amount acquisition step of acquiring an adsorption amount of the recovery target gas adsorbed on the reactant discharged in the discharge step; and
an adsorption amount determination step of determining whether the adsorption amount acquired in the adsorption amount acquisition step is below a predetermined adsorption amount reference value,
wherein, in the reactant supply step, the reactant discharged in the discharge step is supplied when it is determined in the adsorption amount determination step that the adsorption amount exceeds the adsorption amount reference value, and a new reactant is supplied when it is determined in the adsorption amount determination step that the adsorption amount is below the adsorption amount reference value.

16. The gas treatment facility method according to Claim 14,
wherein, in the backwash step, the high-pressure gas is set to a temperature equal to or lower than a temperature of the gas flowing through the gas line, or the high-pressure gas is set to humidity higher than humidity of the gas flowing through the gas line.

17. The gas treatment facility method according to Claim 11 or 12, wherein, in the reactant supply step, the reactant formed in powder form is cooled to a temperature equal to or lower than a temperature of the gas and supplied into the gas.

18. The gas treatment facility method according to Claim 11 or 12, further comprising:
a gas information acquisition step of acquiring at least one of a concentration of the recovery target gas, humidity of the gas, a flow rate of the gas, a pressure of the gas, and a temperature of the gas, in the gas flowing through the gas line,
wherein, in the reactant supply step, a supply amount of the reactant into the gas is adjusted such that
the supply amount of the reactant is increased when the acquired concentration of the recovery target gas in the gas increases, the acquired humidity of the gas decreases, the acquired flow rate of the gas increases, the acquired pressure of the gas decreases, or the acquired temperature of the gas rises, and
the supply amount of the reactant is decreased when the acquired concentration of the recovery target gas in the gas decreases, the acquired humidity of the gas increases, the acquired flow rate of the gas decreases, the acquired pressure of the gas increases, or the acquired temperature of the gas decreases.

19. The gas treatment facility method according to Claim 18, further comprising:
a filter adsorption state acquisition step of acquiring an adsorption amount of the recovery target gas adsorbed on the reactant collected by the dust collection filter and a moisture amount contained in the reactant, based on at least one of the acquired concentration of the recovery target gas in the gas, the acquired humidity of the gas, the acquired flow rate of the gas, the acquired pressure of the gas, and the acquired temperature of the gas,
wherein, in the reactant supply step, a duration of the desorption treatment is adjusted such that
the duration of the desorption treatment is increased when the acquired adsorption amount of the recovery target gas and the acquired moisture amount contained in the reactant increase, and
the duration of the desorption treatment is decreased when the acquired adsorption amount of the recovery target gas and the acquired moisture amount contained in the reactant decrease.

20. The gas treatment facility method according to Claim 11 or 12, further comprising:
an upstream collection step of collecting, using an upstream dust collection filter device including an upstream dust collection filter having heat resistance, a solid contained in the gas that has flowed into the upstream dust collection filter device, before the reactant supply step,
wherein, in the reactant supply step, the reactant is supplied into the gas after the upstream collection step is performed.
